(19) Europäisches Patentamt
European Patent Office
Office européen des brevets

(11) **EP 4 184 480 B1**

(12) **EUROPEAN PATENT SPECIFICATION**

(45) Date of publication and mention
of the grant of the patent:
**27.05.2026 Bulletin 2026/22**

(21) Application number: **22206116.0**

(22) Date of filing: **08.11.2022**

(51) International Patent Classification (IPC):
*G08G 1/16* (2006.01)          *B60W 60/00* (2020.01)
*G01S 13/931* (2020.01)        *G01S 17/931* (2020.01)
*G06V 20/62* (2022.01)         *H04W 4/46* (2018.01)
*G01S 7/00* (2006.01)          *G01S 7/48* (2006.01)
*G01S 13/86* (2006.01)         *G01S 17/86* (2020.01)
*H04W 4/029* (2018.01)         *H04W 4/38* (2018.01)

(52) Cooperative Patent Classification (CPC):
**G08G 1/163; G01S 7/003; G01S 7/4802;
G01S 13/867; G01S 13/931; G01S 17/86;
G01S 17/931; G06V 20/625; G08G 1/166;
H04W 4/029; H04W 4/38; H04W 4/46;** G01S 13/86;
G01S 2013/9316; G01S 2013/9318;          (Cont.)

(54) **DRIVING CONTROL SYSTEM AND METHOD OF CONTROLLING THE SAME USING SENSOR FUSION BETWEEN VEHICLES**

FAHRSTEUERUNGSSYSTEM UND VERFAHREN ZUR STEUERUNG DAVON UNTER VERWENDUNG VON SENSORFUSION ZWISCHEN FAHRZEUGEN

SYSTÈME DE COMMANDE DE CONDUITE ET SON PROCÉDÉ DE COMMANDE À L'AIDE D'UNE FUSION DE CAPTEURS ENTRE VÉHICULES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.11.2021 KR 20210158535
17.11.2021 KR 20210158536**

(43) Date of publication of application:
**24.05.2023 Bulletin 2023/21**

(73) Proprietor: **Hyundai Mobis Co., Ltd.
Gangnam-gu
Seoul 06141 (KR)**

(72) Inventor: **LEE, Jae Young
16891 Yongin-si (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(56) References cited:
**WO-A1-2021/146891      CN-A- 111 885 524
US-A1- 2014 104 077     US-A1- 2019 258 875**

(52) Cooperative Patent Classification (CPC): (Cont.)
G01S 2013/93185; G01S 2013/9319;
G01S 2013/9322; G01S 2013/9323;
G01S 2013/9324

**Description**

**BACKGROUND**

FIELD

Exemplary embodiments of the present disclosure relate to a driving control system and a method of controlling the same using sensor fusion between vehicles, which recognize one or more adjacent vehicles by allowing the vehicles to share sensor data through communication and using the fused sensor data and control driving in response to the sensor data and the driving of the recognized vehicle.

DISCUSSION OF THE BACKGROUND

An autonomous vehicle refers to a vehicle that autonomously travels to a given destination by recognizing a surrounding environment and performing control to determine a traveling situation without a driver's intervention.

The vehicle performs autonomous driving while controlling a traveling direction by controlling a steering angle based on map information and acquired information. The vehicle acquires information on road or other vehicles positioned at the periphery by using a plurality of sensors, cameras, position information, and the like while traveling. The vehicle controls driving based on the acquired data.

Because the vehicle does not travel alone on the road, the vehicle needs to recognize a position of a peripheral vehicle and control driving in accordance with a change in position of the peripheral vehicle while preventing a collision between the vehicles.

In general, in case that the position recognition is performed precisely by a high-definition map (HDMap) and a GPS, it is possible to implement an autonomous driving system in the vehicle, without a sensor, by sharing, in real time, information on coordinates of objects by means of V2X (vehicle to anything).

However, there are problems in that a process of maintaining and repairing the HDMap cannot be performed in real time, and it is difficult to perform the position recognition because of a GPS coordinate error and a shadow zone.

Further, the vehicle needs to stably share information on peripheral objects in real time by using the V2X in various environments, but there is a limitation in stability, and information on vehicles manufactured in the past cannot be identified. Therefore, most of autonomous vehicles control autonomous driving by recognizing surrounding environments by using sensors.

In general, the autonomous driving system applied to the vehicle recognizes the surrounding environment by using an ultrasonic sensor, a camera, Radar, and Lidar.

The ultrasonic sensor, Radar, and Lidar respectively emit ultrasonic waves, electromagnetic waves, and light into the atmosphere and process reflected signals, thereby determining the presence or absence of peripheral obstacles. For this reason, there is a problem in that recognition performance is changed by a change in medium in a traveling situation.

The camera may provide not only information on obstacles but also information on roads such as lanes, like visual information of a person. However, it is not easy to recognize all various patterns indicated by a combination of the object and the background. In particular, there is a problem in that recognition performance deteriorates when the object and the background are similar to each other.

The autonomous vehicle is not yet perfectly operated, unlike a situation in which a person normally drives a vehicle. For this reason, an unexpected situation may occur partially.

Korean Patent No. 10-2205299 discloses a method of changing lanes by allowing vehicles to share data. The patent document proposes a technology for allowing the vehicle to move between the lanes by transmitting and receiving basic safety messages through communication between the vehicles and predicting a position of another vehicle in consideration of a communication delay time.

However, there is a limitation in stability of the shared data. Further, the technology has a limitation because the technology does not recognize the peripheral vehicle by adopting data in respect to the adjacent vehicle within a predetermined distance.

Accordingly, to overcome a limitation of recognition performance caused by a single sensor, there is a need for a solution related to an autonomous driving system that fuses information acquired by processing sensor signals, produces information with higher reliability, and uses the information to control a vehicle.

[Document of Related Art]

[Patent Document]

(Patent Document 1) Korean Patent No. 10-2205299

US 2019/258875 A1 discloses a vehicular driving assist system including a camera disposed at an equipped vehicle, a wireless communication module operable to wirelessly communicate with other vehicles near the equipped vehicle, and a control that wirelessly communicates with other vehicles via the wireless communication module. In the document it is described that the control wirelessly receives license plate information from another vehicle, the control, via processing of image data captured by the camera, determines license plate information of another vehicle, the control determines if the license plate information received wirelessly and the determined license plate information match, and responsive to determination that the wirelessly received license plate information and the determined license plate information match, the control establishes a secure communication channel with the other vehicle.

US 2014/104077 A1 discloses a method for associating a transmitter which transmits at least one communication information in a car-to-car communication with an object in a receiving motor vehicle wherein the object is described by environmental data from at least one environmental sensor, wherein the association occurs based on comparing environmental data from at least one environmental sensor of the motor vehicle having the transmitter with corresponding environmental data of the receiving motor vehicle.

## SUMMARY

The invention is defined by the appended claims.

According to the aspect, the driving control system and the method of controlling the same using sensor fusion between vehicles according to the present disclosure fuses and uses sensor data of another vehicle, which makes it possible to increase the detectable range and improve recognition performance related to the surrounding environment and object.

According to the aspect, the present disclosure may easily recognize a vehicle or object positioned at the periphery by converting the coordinate of the sensor data of the matched vehicle and fusing sensor data of the host vehicle, which makes it possible to improve recognition accuracy, prevent an accident caused by a collision, and improve stability of the vehicle.

According to the aspect, the present disclosure acquires and corrects information on an erroneously recognized vehicle by using sensor data of another vehicle even though the adjacent vehicle cannot be recognized or the vehicle, which is not present, is erroneously recognized, which makes it possible to accurately recognize the surrounding environment and improve the traveling stability.

According to the aspect of the present disclosure, the number of sensor data, which may be fused, increases in accordance with the number of adjacent vehicles, which makes it possible to increase the detectable range, enable stable autonomous driving, produce recognition data having high reliability, and improve the autonomous driving step.

## BRIEF DESCRIPTION OF THE DRAWINGS

FIG. 1 is a block diagram briefly illustrating a configuration of a driving control system using sensor fusion between vehicles according to an embodiment of the present disclosure.

FIG. 2 is a view for explaining data used for sensor fusion between vehicles according to the embodiment of the present disclosure.

FIG. 3 is an exemplified view for explaining a vehicle recognition method of the driving control system using sensor fusion between vehicles according to the embodiment of the present disclosure.

FIG. 4 is a flowchart illustrating a sensor fusion method of the driving control system using sensor fusion between vehicles according to the embodiment of the present disclosure.

FIG. 5 is a view for explaining vehicle matching using position information of the driving control system using sensor fusion between vehicles according to the embodiment of the present disclosure.

FIG. 6 is a flowchart illustrating a vehicle matching method using position information of the driving control system using sensor fusion between vehicles according to the embodiment of the present disclosure.

FIG. 7 is a flowchart illustrating a method of managing matched data of the driving control system using sensor fusion between vehicles according to the embodiment of the present disclosure.

FIG. 8 is an exemplified view for explaining coordinate conversion of the driving control system using sensor fusion between vehicles according to the embodiment of the present disclosure.

FIG. 9 is an exemplified view illustrating an example related to vehicle matching of the driving control system using sensor fusion between vehicles according to the embodiment of the present disclosure.

FIG. 10 is a flowchart illustrating a driving control method of the driving control system using sensor fusion between vehicles according to the embodiment of the present disclosure.

FIG. 11 is a view for explaining vehicle matching related to a non-recognized vehicle by the driving control system using sensor fusion between vehicles according to the embodiment of the present disclosure.

FIG. 12 is a flowchart illustrating a non-recognized vehicle matching method of the driving control system using sensor fusion between vehicles according to the embodiment of the present disclosure.

FIG. 13 is a view for explaining information correction related to an erroneously recognized vehicle by the driving control system using sensor fusion between vehicles according to the embodiment of the present disclosure.

FIG. 14 is a flowchart illustrating a method of performing information correction on an erroneously recognized vehicle by the driving control system using sensor fusion between vehicles according to the embodiment of the present disclosure.

FIG. 15 is a view for explaining vehicle matching using sensor data by the driving control system using sensor fusion between vehicles according to the embodiment of the present disclosure.

FIG. 16 is an exemplified view illustrating an example related to vehicle matching by the driving control system using sensor fusion between vehicles according to the embodiment of the present disclosure.

## DETAILED DESCRIPTION OF THE ILLUSTRATED EMBODIMENTS

Hereinafter, the present disclosure will be described with reference to the accompanying drawings.

Here, thicknesses of lines, sizes of constituent elements, or the like illustrated in the drawings, may be exaggerated for clarity and convenience of description. In addition, the terms used below are defined in consideration of the functions thereof in the present disclosure and may vary depending on the intention of a user or an operator or a usual practice. Therefore, such terms should be defined based on the entire contents of the present specification.

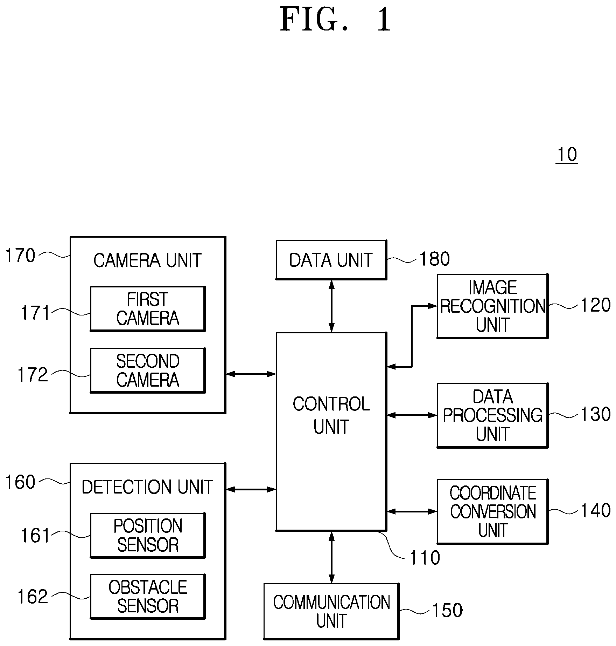

FIG. 1 is a block diagram briefly illustrating a configuration of a driving control system using sensor fusion between vehicles according to an embodiment of the present disclosure.

As illustrated in FIG. 1, the driving control system includes a camera unit 170, a detection unit 160, a data unit 180, a communication unit 150, an image recognition unit 120, a data processing unit 130, a coordinate conversion unit 140, and a control unit 110 configured to control an overall operation.

The driving control system further includes a drive unit (not illustrated) configured to control a power source such as a motor (not illustrated), a battery management system (not illustrated) configured to manage a battery, a brake system (not illustrated), and a steering system (not illustrated). However, descriptions thereof will be omitted.

The detection unit 160 includes a plurality of sensors and detects an object adjacent to the periphery of the vehicle, for example, detects another vehicle, and the detection unit 160 detects a surrounding environment of the vehicle and road information.

The detection unit 160 includes a position sensor 161 configured to detect a position of the vehicle, and an obstacle sensor 162 configured to detect a peripheral object.

The position sensor 161 includes a GPS sensor and has a sensor capable of detecting a position of the current vehicle through communication with other devices. The position sensor 161 may include a sensor configured to detect a position by analyzing a signal transmitted or received by using a UWB method.

The obstacle sensor 162 detects an object positioned within a predetermined distance from the vehicle. The obstacle sensor 162 includes at least one of an infrared sensor, an ultrasonic sensor, a laser sensor, Radar, and Lidar. The obstacle sensor 162 may measure a distance from the detected object.

In addition, the detection unit 160 may include a vehicle velocity sensor, a temperature sensor, a pressure sensor, and the like and detect a traveling state of the vehicle and vehicle information.

The camera unit 170 includes a plurality of cameras 171 and 172 and capture images of the periphery of the vehicle. The camera unit 170 includes a first camera 171 installed at one side of a front portion of the vehicle or installed adjacent to a front glass and configured to capture an image of a front side in a traveling direction, and a second camera 172 installed at a rear side of the vehicle and configured to capture an image of the rear side.

In addition, the camera unit 170 may produce a surround view related to the periphery of the vehicle 10 by using the plurality of cameras.

The camera unit 170 applies the captured image to the control unit 110 and stores image data in the data unit 180. The camera unit 170 may further include an image processing unit (not illustrated) that converts an image signal of the camera into image data in a predetermined format.

The data unit 180 stores control data for controlling the vehicle, data detected by the detection unit 160, data transmitted or received by the communication unit 150, and data related to the captured image.

The communication unit 150 includes a plurality of communication modules and performs CAN communication for transmitting or receiving data in the vehicle, near field communication such as Bluetooth, or wireless communication for connection with an external server or the like.

The communication unit 150 communicates with a road information server for providing an external database (DB) (not illustrated) or road information. The communication unit 150 receives information on the current position of the vehicle, information on road on which the vehicle travels, traffic information, traffic jam information, information on the periphery of the road, weather information, and the like.

The communication unit 150 may be connected to a portable terminal (not illustrated) of a driver through a near-field communication module.

The communication unit 150 communicates with another adjacent vehicle.

The communication unit 150 transmits and receives a basic safety message (BSM) by performing the communication with another vehicle by using a V2X (vehicle to anything) method.

The communication unit 150 includes and transmits sensor data to an optional field of the basic safety message (BSM), thereby allowing the vehicles to share the sensor data.

The image recognition unit 120 recognizes a number plate of another vehicle positioned at the periphery of the vehicle based on the image captured by the camera unit 170.

The image recognition unit 120 may recognize a number plate of a vehicle positioned at the front side by using a front image and recognize a number plate of a vehicle positioned at the rear side by using a rear image.

In addition, the image recognition unit 120 analyzes a motion of another vehicle based on the captured image. The image recognition unit 120 analyzes operations related to a movement between lanes, whether acceleration or deceleration is performed, and the like based on the images of the vehicles positioned to front, rear, left, and right sides.

The data processing unit 130 distinguishes between the vehicles by extracting information included in the optional field of the basic safety message received through the communication unit, analyzing the extracted data, and matching the extracted data with the number plate recognized by the image recognition unit 120.

The data processing unit 130 identifies the vehicle matched with the number plate. In case that the number plate cannot be recognized, the data processing unit 130 compares an operation of the vehicle analyzed based on the image with the data of the basic safety message and matches the vehicle.

The coordinate conversion unit 140 converts data of another vehicle included in the basic safety message into a coordinate based on a host vehicle. The coordinate conversion unit 140 may set up the coordinate conversion related to the matched vehicle in consideration of a relative position of the corresponding vehicle.

Because each of the vehicles records information on position or the like based on the host vehicle, the coordinate conversion unit 140 analyzes the data received from another vehicle and converts, based on the host vehicle, a coordinate set up based on the corresponding vehicle center.

During the autonomous driving, the control unit 110 sets up a route to a destination and performs control to perform autonomous driving based on road information acquired by the detection unit 160 and the camera unit 170, the surrounding environment, and information on another adjacent vehicle. In addition, the control unit 110 controls a steering angle, controls an operation of the vehicle to accelerate or decelerate the vehicle, and controls a brake system (not illustrated) to stop the vehicle.

Because the autonomous driving method may be performed by using various known methods, a detailed description thereof will be omitted.

The control unit 110 recognizes an adjacent vehicle and tracks an operation of the vehicle based on a vehicle matching result through the basic safety message and the recognition of the number plate and based on a vehicle matching result through the basic safety message and the operation of the vehicle.

In addition, when the coordinate conversion unit 140 receives data of another vehicle recognized by the matched vehicle and converts sensor data of the vehicle into the coordinate, the control unit 110 fuses the coordinate and the data acquired from the detection unit 160 of the host vehicle by means of the basic safety message and controls the driving.

The control unit 110 analyzes the operation of another vehicle based on the sensor data of the received basic safety message and controls the driving in accordance with a change in operation of another vehicle.

The control unit 110 may use not only data of the detection unit 160 but also sensor data detected by another vehicle. Therefore, the control unit 110 may acquire a larger amount of information and also acquire information related to a blind spot, thereby easily tracking the operation of the peripheral vehicle and acquiring information on the periphery.

Even though the vehicle is not recognized from the image, the control unit 110 controls the driving by accelerating or decelerating the vehicle in response to a change in operation of the vehicle such as when the vehicle enters a traveling lane or when any one of front vehicles decelerates.

The control unit 110 outputs a notification related to a generated event, a change in operation of the recognized vehicle, changes during the traveling, and the like in the form of at least one combination of a notification message, alarm sound, a sound effect, a voice notification, and warning light through an output unit (not illustrated) while the vehicle travels.

Therefore, the driving control system of the vehicle 10 fuses, through the coordinate conversion, the sensor information of the host vehicle with the sensor data of the matched vehicle received through the basic safety message (BSM), thereby increasing the number of sensors used for the traveling environment recognition by using the sensor information of another vehicle.

The control unit 110 may be a controller typically called an electronic control unit (ECU), a micro-controller unit (MCU), and the like. The control unit 110 may include a processor and a memory coupled to the processor. The memory may store commands for allowing the processor to perform the operations of the control unit 110 according to the embodiment of the present disclosure and/or the steps of the present disclosure.

In addition, typically in the present field, some exemplary embodiments may be illustrated in the accompanying drawings in view of function blocks, units, and/or modules. Those skilled in the art may understand that the blocks, units, and/or modules are physically implemented by electronic (or optical) circuits such as logic circuits, discrete components, processors, hard-wired circuits, memory elements, and wiring connections. In case that the block, unit, and/or module is implemented by a processor or other similar hardware, the block, unit, and/or module may be programmed or controlled by using software (e.g., codes) to perform various functions discussed in the present specification. In addition, the block, unit, and/or module may be implemented by exclusive hardware or implemented as a combination of exclusive hardware for performing a partial function and a processor (e.g., one or more programmed processors and relevant circuits) for performing other functions. In addition, the blocks, units, and/or modules in some exemplary embodiments may be physically divided into two or more interactive discrete blocks, units, and/or modules without departing from the concept of the present disclosure. In addition, the blocks, units, and/or modules in some exemplary embodiments may be physically coupled to more complicated blocks, units, and/or modules without departing from the concept of the present disclosure.

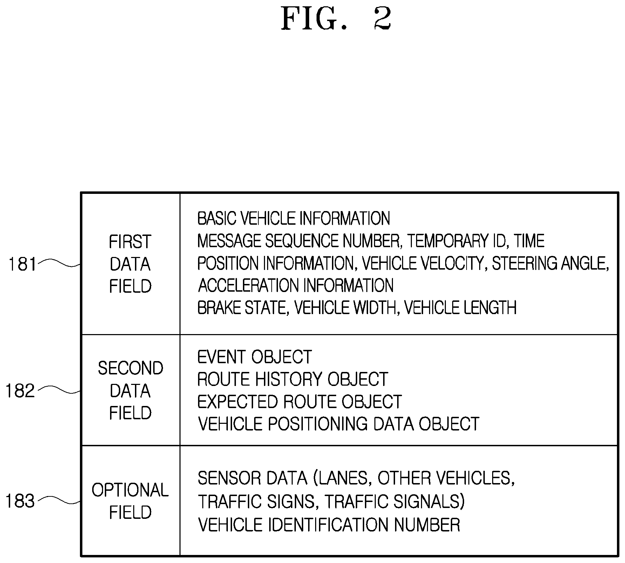

FIG. 2 is a view for explaining data used for sensor fusion between vehicles according to the embodiment of the present disclosure.

The driving control system exchanges a basic safety message (BSM) defined in a protocol (SAE J2735) with a device within a predetermined communication range, e.g., a range of 500 m for each particular period (ex: 100 ms) by using V2X.

As illustrated in FIG. 2, the driving control system transmits and receives a basic safety message including an optional field as well as two data fields and determined data fields by using a V2X communication method. The driving control system may transmit and receive data including data related to recognized environment information and sensor data in addition to the optional field.

The basic safety message includes a first data field 181, a second data field 182, and an optional field 183.

The driving control system transmits, to another vehicle, a basic safety message including the sensor data included in the optional field 183 and detects and uses the sensor data of the optional field included in the basic safety message of another vehicle.

The first data field 181 includes a basic vehicle state. The basic vehicle information includes information related to a message sequence number, temporary ID, time, position information (position latitude, longitude, elevation, and accuracy), a vehicle velocity, heading, steering wheel angle, acceleration information (vehicle accelerations and yaw rate), a brake status, a vehicle length, a vehicle width, and the like.

The second data field 182 includes a vehicle events object, a vehicle path history object, a vehicle path prediction object, and a vehicle relative positioning RTCM 1002 data object.

The optional field 183 includes sensor data and a vehicle identification number (license plate). The sensor data may include lanes, information on other vehicles, signal information (traffic signs), traffic signals, and the like.

Because no data are assigned to the optional field 183, the optional field 183 includes data related to detected sensor data, recognized environment information, a number plate, and the like.

The driving control system shares the sensor data by using the optional field 183 of the basic safety message and acquires information on the periphery by fusing the sensor data with the data detected by the driving control system.

For example, assuming that two vehicles A and B exist at the front side and travel at the same velocity and acceleration, the driving control system, it is difficult to distinguish between vehicle A and vehicle B only by using a GPS signal because there is an error of several meters in GPS position information.

The driving control system distinguishes between the two vehicles, which are not easily distinguished, by fusing the sensor data included in two basic safety messages transmitted from the vehicles with the sensor data measured by the detection unit 160 of the host vehicle and matching the vehicles with the sensor data.

The driving control system matches the vehicles by recognizing the number plate of the vehicle. Further, the driving control system matches the vehicles by distinguishing between operations of the vehicles based on the sensor data of the vehicles.

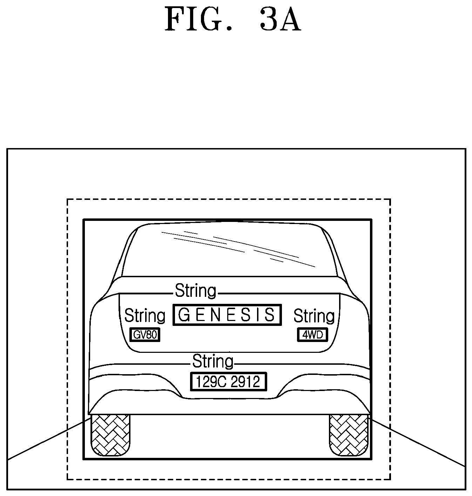

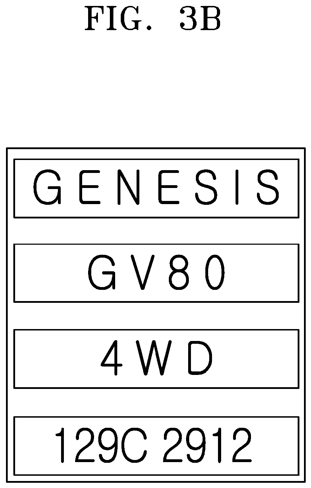

FIG. 3 is an exemplified view for explaining a vehicle recognition method of the driving control system using sensor fusion between vehicles according to the embodiment of the present disclosure.

As illustrated in FIG. 3A, the driving control system recognizes a number plate of another vehicle by using the plurality of cameras of the camera unit 170, particularly, the first camera 171 configured to capture the front image, and the first camera 172 configured to capture the rear image. The driving control system recognizes a number plate of a rear vehicle based on the rear image.

The image recognition unit 120 of the driving control system recognizes the vehicles from the images, separates the images of the vehicles, and then recognizes the number plates of the vehicles.

It is mandatory to mark a vehicle registration number (vehicle identification number) on the number plate of the vehicle, which is provided in the form of a rectangular metal plate, in order to manage the vehicle. The vehicle identification number marked on the number plate is the only number assigned to a single vehicle. Therefore, the driving control system performs the vehicle matching by using the vehicle identification number.

The image recognition unit 120 extracts the vehicle identification number by recognizing the number plate. The data processing unit compares the extracted vehicle identification number with the vehicle identification number included in the basic safety message and matches the basic safety message with the vehicle having the recognized number plate.

The driving control system includes the sensor data and the vehicle identification number in the optional field 183 of the basic safety message (BSM). Therefore, the driving control system not only identifies the vehicle from which the basic safety message is received, but also distinguishes between the vehicles by matching the vehicles with the vehicle identification numbers recognized from the images and match the actual vehicles with the basic safety message.

The driving control system acquires images from the first camera 171 at the front side and the second camera 172 at the rear side and recognizes the vehicles and the number plates by using the image recognition unit 120. The driving control system uses pre-stored learning data and extracts the vehicle identification number by means of a technology for recognizing letters or numbers from images based on deep learning.

In some instances, the driving control system may be connected to an external server through the communication unit 150 and extract the vehicle identification number from the image based on deep learning.

The driving control system uses an object recognition network and detects a vehicle and a bounding box that surrounds transverse letters.

Because the number plate is mounted at a center of a vehicle bumper, the driving control system extracts a bounding box of a letter class included in a vehicle bounding box with an added margin as a candidate group, changes a size of a region of the letter bounding box to a predetermined size, and recognizes letters by inputting an image of the letter bounding box to an optical character recognition (OCR) network.

The recognized letter string is as illustrated in FIG. 3B.

The driving control system determines the consistency indicating whether the recognized letter string is coincident with a number plate format. Because the standard of the number plate may vary for each country, the driving control system determines one letter string or two letter strings depending on the standard.

For example, in case that a plurality of letter strings is recognized, the driving control system determines the consistency indicating whether the letters, among GENESIS, GV80, 4WD, and 129CHA2912, conform to the number plate format.

In addition, in case that a plurality of letter strings is recognized in one vehicle, the driving control system determines the consistency in respect to a result of combining the two letter strings.

For example, the driving control system may combine GENESIS, GV80, 4WD, and 129CHA2912 into GENESISGV80, GV804WD, and the like and determine the consistency.

The driving control system recognizes 129CHA2912, which conforms to the number plate format, as the number plate through the combination and the consistency analysis related to the recognized letter strings.

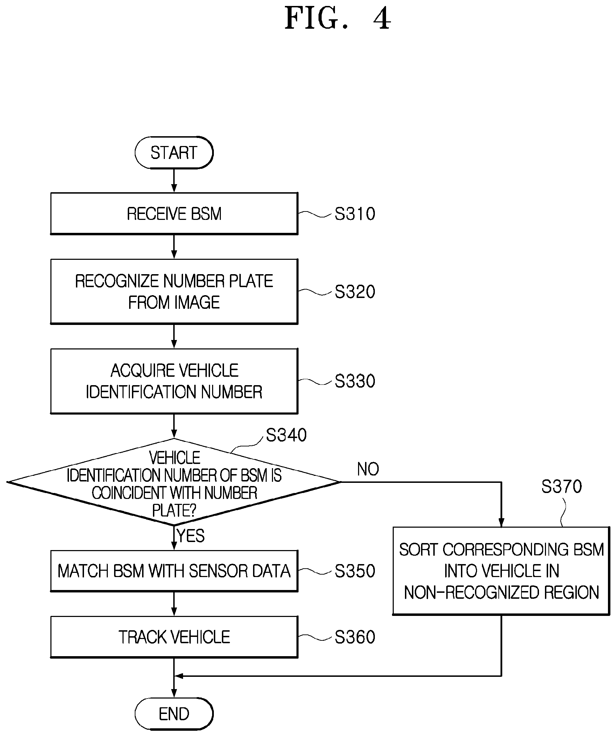

FIG. 4 is a flowchart illustrating a sensor fusion method of the driving control system using sensor fusion between vehicles according to the embodiment of the present disclosure.

As illustrated in FIG. 4, the driving control system receives a basic safety message (BSM) from another vehicle through the communication unit 150 (S310). The basic safety message may be transmitted to or received from other vehicles within a predetermined distance at regular intervals by the V2X method.

During the communication, the driving control system transmits the sensor data including at least one of lanes, other vehicles, objects, traffic signals, and traffic information detected by the plurality of sensors and the vehicle identification number included in the optional field of the basic safety message. The driving control system receives the basic safety message including the sensor data from the plurality of vehicles.

The driving control system analyzes the images acquired by the plurality of cameras 171 and 172 of the camera unit 170, and the image recognition unit 120 distinguishes between the vehicles in the images and recognizes the number plate in the image region determined as the vehicle (S320).

The driving control system acquires the vehicle identification number by analyzing the image of the recognized number plate based on deep learning (S340). The driving control system compares the vehicle identification number, which is extracted from the optional field of the basic safety message (BSM) by the data processing unit 130, with the vehicle identification number recognized from the number plate and determines whether the two vehicle identification numbers are coincident with each other (S340).

When the vehicle identification number extracted from the optional field of the basic safety message is coincident with the vehicle identification number recognized from the image, the data processing unit 130 matches the sensor data with the corresponding vehicle identification number (S350).

Meanwhile, when the vehicle identification number extracted from the optional field of the basic safety message is not coincident with the vehicle identification number recognized from the image or when there is no coincident vehicle identification number, the data processing unit 130 sorts the vehicle into a vehicle positioned in a non-recognized region in which it is difficult to recognize the number plate from the image (S370). The data processing unit 130 performs the vehicle matching based on the vehicle operation or vehicle position to be described below in respect to the vehicle in the non-recognized region.

The data processing unit 130 stores the data related to the matched vehicle in the data unit 180 and tracks the operation of the corresponding vehicle (S360).

The coordinate conversion unit 140 converts the sensor data included in the basic safety message of the matched vehicle into a coordinate based on the host vehicle.

The control unit 110 acquires information on the periphery of the vehicle by fusing the data of the detection unit 160 and the sensor data of the matched vehicle with the converted coordinate and controls the autonomous driving based on the information.

For example, in case that a vehicle positioned at the front side is matched, a traveling velocity may be controlled in response to a change in velocity of the front vehicle to prevent a collision. Further, when a front right vehicle moves between the lanes, the driving may be controlled in response to the movement of the front right vehicle.

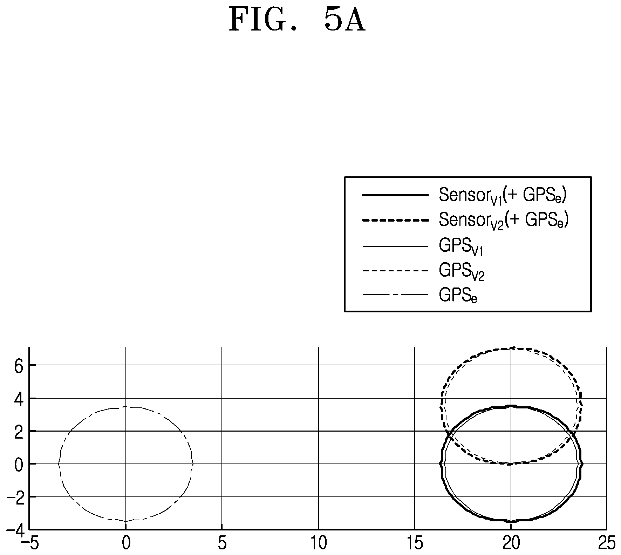

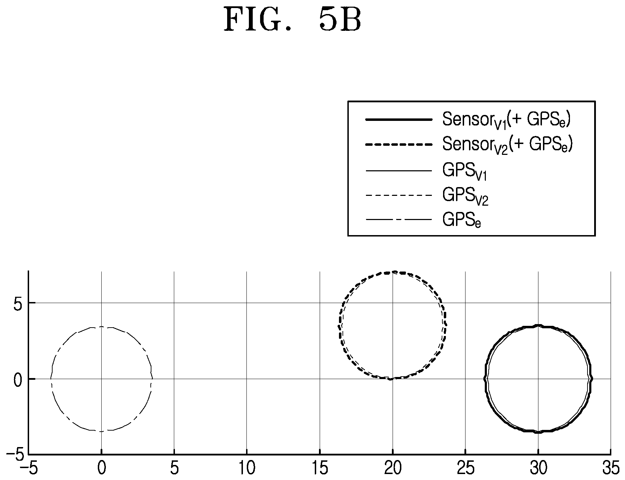

FIG. 5 is a view for explaining vehicle matching using position information of the driving control system using sensor fusion between vehicles according to the embodiment of the present disclosure.

In case that the vehicle 10 is matched with the basic safety message by recognizing the number plate by using the image of the camera, the accuracy of the vehicle matching is improved, but a distance between the vehicles needs to be short to the extent that the letter string may be identified.

In addition, in case that the number plate of the vehicle 10 is recognized based on the image captured by the camera, number plates of a front vehicle, a rear vehicle, a left front vehicle, a left rear vehicle, a right front vehicle, and a right rear vehicle may be recognized. However, in case that the vehicle is positioned at the left or right side or an angle of view of the camera is partially included, the number plates of the plurality of vehicles are hardly recognized from the images, and the vehicles cannot be matched by using the images.

Therefore, the driving control system matches the vehicle based on the position or operation of the vehicle in case that the data processing unit 130 cannot recognize the number plate from the image.

The driving control system may erroneously match the vehicles when performing the matching only by using an absolute coordinate, a velocity, and direction information at a particular point in time because of an error of the GPS and a likelihood that the message and the vehicle detected by the sensor correspond to each other in a multi-to-multi corresponding manner. Therefore, the driving control system tracks the matched vehicle, identifies whether information related to a plurality of samples has consistency, and then finally performs the vehicle matching. The driving control system may improve the accuracy by reidentifying whether the vehicle matching is normally completed by tracking the vehicle.

As illustrated in FIG. 5A, in case that the vehicle positioned adjacent to a side lane, the driving control system may receive a GPS value and a sensor value of the vehicle.

The data processing unit 130 configures an actually measured vehicle candidate region by mapping the vehicle value measured by the sensor within a GPS error range of the host vehicle, produces a candidate region related to the vehicle, which has transmitted the basic safety message, by applying the GPS error range to the received basic safety message (BSM), and sets up a matching candidate by obtaining an intersection with the candidate region related to the actually measured vehicle.

The data processing unit 130 determines a matching failure in case that there are multiple information intersections between the sensor value and the GPS value and the vehicles cannot be distinguished even when the information on the GPS and the sensor with the identified matching is eliminated.

The data processing unit 130 matches a GPS signal of the host vehicle with respect to a first vehicle V1 and a sensor value received from the first vehicle V1 and matches a GPS signal of the host vehicle with respect to a second vehicle V2 and a sensor value of the second vehicle V2.

However, the data processing unit 130 determines a matching failure because the candidate regions related to the first and second vehicles overlap.

In addition, the data processing unit 130 determines a matching failure in respect to the corresponding vehicle in case that there is no data matched with the GPS value of the host vehicle with respect to a third vehicle e.

As illustrated in FIG. 5B, in case that the driving control system may identify a longitudinal position of a vehicle, i.e., in case that a distance difference is larger than a GPS error or a velocity difference may be identified, the driving control system matches the vehicles through the position intersection between the GPS value and the sensor value, produces a track, and then performs the tracking.

The data processing unit 130 matches the GPS signal of the host vehicle with respect to the first vehicle V1 and the sensor value received from the first vehicle V1 and matches the GPS signal of the host vehicle with respect to the second vehicle V2 and the sensor value of the second vehicle V2. Because the regions of the first and second vehicles do not overlap, the driving control system matches the vehicle, produces the track, and performs the tracking.

The driving control system finally performs the vehicle matching based on a tracking result.

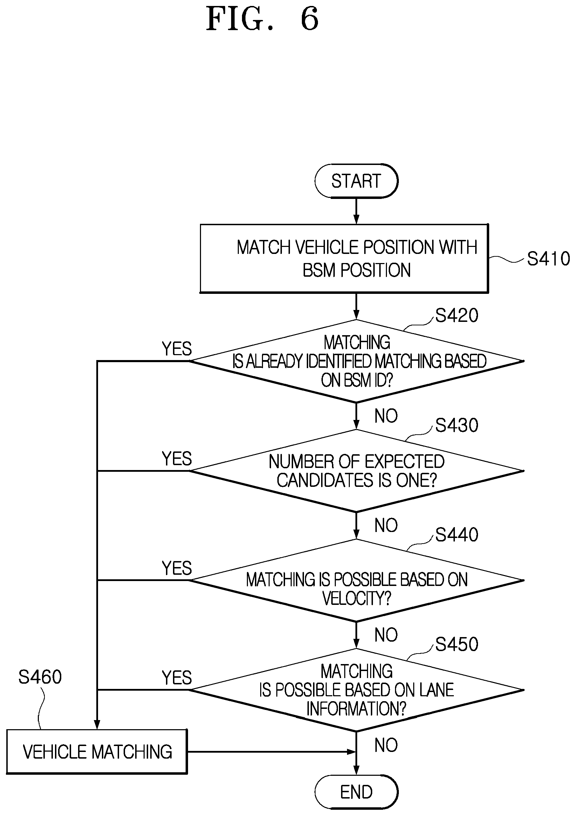

FIG. 6 is a flowchart illustrating a vehicle matching method using position information of the driving control system using sensor fusion between vehicles according to the embodiment of the present disclosure.

As illustrated in FIG. 6, the driving control system manages the matched vehicle by tracking an operation of the matched vehicle.

The data processing unit 130 matches the actually measured vehicle and the basic safety message by matching the autonomously measured position related to the vehicle and the position information included in the basic safety message (S410).

The data processing unit 130 identifies whether the matching is already identified based on an ID (temporary ID) included in the basic safety message (S420). In case that the matching is identified matching, the data processing unit 130 performs the vehicle matching (S460).

In case that the matching is not identified matching, the data processing unit 130 determines whether the number of expected candidates to be matched is one (S430).

In case that the number of expected candidates is one, the data processing unit 130 matches the corresponding candidate and the vehicle (S460).

Meanwhile, in case that the number of expected candidates is two or more, the data processing unit 130 determines whether the matching may be performed by using velocity information of the vehicle (S440). The data processing unit 130 calculates a velocity of the vehicle, compares the velocity with the velocity of the vehicle included in the basic safety message, and matches the vehicle (S460).

In case that the matching cannot be performed by the velocity, the data processing unit 130 determines whether the matching may be performed by lane information (S450). In case that the matching may be performed by the lane information, the data processing unit 130 performs the vehicle matching based on the lane and a traveling direction of the vehicle (S460).

In case that the host vehicle and a candidate vehicle are positioned on edge lanes or a traveling lane may be recognized based on a guard rail or the like, the data processing unit 130 may match the vehicle by extracting the sensor data from the optional field of the basic safety message (BSM) and determining whether the sensor data is identical to the sensor information.

In case that the matching may be performed by the velocity, the data processing unit 130 matches the vehicle based on the vehicle velocity of the basic safety message (S460).

Meanwhile, the data processing unit 130 determines a matching failure in case that the matching is not identified, the number of expected candidates is two or more, and the matching cannot be performed by the velocity and lane information.

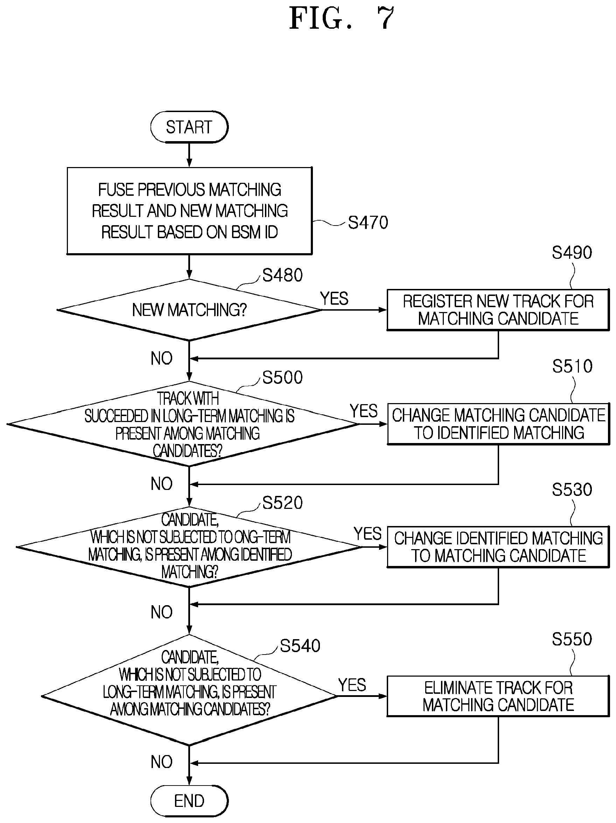

FIG. 7 is a flowchart illustrating a method of managing matched data of the driving control system using sensor fusion between vehicles according to the embodiment of the present disclosure.

As illustrated in FIG. 7, in case of recognize the number plate from the image and matching the vehicle based on the information on position or operation of the vehicle, the driving control system tracks the operation of the corresponding vehicle and identifies whether the vehicle matching is normally performed.

The data processing unit 130 fuses a previous matching result and a new matching result based on the ID of the basic safety message (S470).

The data processing unit 130 registers a new track related to a matching candidate (S490) in respect to new matching (S480). The driving control system tracks and records the operation of the vehicle with the matched information.

The data processing unit 130 determines whether there is a track having succeeded in preset long-term matching among the matching candidates in respect to the previous matching (S500). In case that there is the track having succeeded in long-term matching, the corresponding matching candidate is changed to identified matching (S510).

The data processing unit 130 determines whether there is a candidate that has not been subjected to long-term matching in respect to the identified matching (S520). In respect to the candidate that has not been subjected to the long-term matching among the matching candidates, the corresponding identified matching is changed to the matching candidate (S530).

In addition, the data processing unit 130 determines whether there is a candidate that has not been subjected to the long-term matching among the matching candidates (S540), and the candidate, which has not been subjected to the long-term matching, eliminates the matching candidate track (S550).

The data processing unit 130 matches the vehicle based on the position or operation of the vehicle and registers and manages the track in respect to the matched vehicle. Therefore, the data processing unit 130 may change the candidate to the identified matching based on the matching result for a predetermined period of time or change the identified matching to the candidate. Further, the data processing unit 130 may manage information on the vehicle matching in accordance with a vehicle tracking record by eliminating the track from the candidate that is not matched for a period of time.

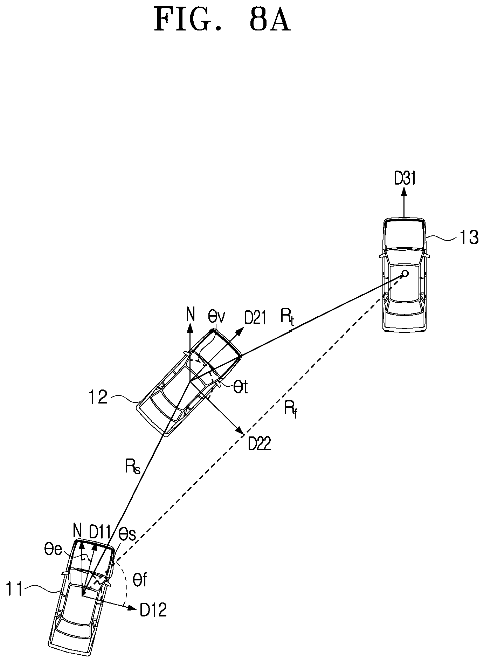

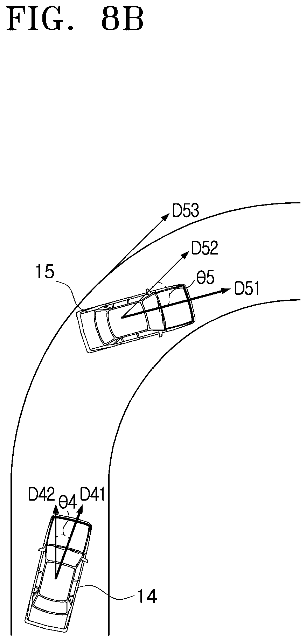

FIG. 8 is an exemplified view for explaining coordinate conversion of the driving control system using sensor fusion between vehicles according to the embodiment of the present disclosure.

The driving control system fuses sensor information by transmitting or receiving the sensor data included in the optional field of the basic safety message (BSM) of the V2X. The driving control system converts the sensor data of the matched vehicle into a host vehicle coordinate system by moving parallelly based on relative coordinate information measured by a host vehicle sensor and rotating and changing by using a rotation angle calculated based on a terrestrial magnetism sensor, a lane, and a traveling direction.

As illustrated in FIG. 8A, when a basic safety message (BSM) and sensor data of a counterpart vehicle are completely matched, the coordinate conversion unit 140 identifies a relative coordinate between the vehicles based on the sensor data.

The coordinate conversion unit 140 fuses sensor data measured by the vehicles by adding information on the terrestrial magnetism sensor or lane reference direction and transmits the information on the terrestrial magnetism sensor or lane reference traveling angle, which may indicate a direction difference between the vehicles by using the optional field of the basic safety message (BSM).

The driving control system of the vehicle 10 matches the vehicle and detects a target vehicle by using sensor data of another vehicle.

For example, the first vehicle 11 travels in an eleventh direction D11 that defines a first angle $\theta_e$ with respect to a north side N, and the second vehicle 12 travels in a twenty-first direction D21 that defines a second angle $\theta_v$ with respect to the north side N.

The first vehicle 11 matches and identifies the second vehicle 12 and identify the third vehicle 13 based on data included in the basic safety message of the second vehicle 12.

The second vehicle 12 is detected as a coordinate $(R_t, \theta_t)$ with respect to the third vehicle 13, and the first vehicle 11 converts a coordinate of the third vehicle 13 into a coordinate with respect to the host vehicle through the basic safety message (BSM) of the second vehicle 12.

The first vehicle 11 compensates for the rotation and translation of the coordinate system during the coordinate conversion.

The first vehicle 11 shares traveling direction angles $\theta_e$ and $\theta_v$ of the vehicle based on the north side N and an N-pole by using the terrestrial magnetism sensor and compensates for the rotation by rotating and converting a rotation axis difference by $(\theta_e - \theta_v)$. In addition, the first vehicle 11 compensates for the translation by using a distance $R_s$ from the second vehicle measured by the host vehicle sensor and a rotation angle $\theta_s$ with respect to the third vehicle.

The first vehicle 11 calculates a coordinate $(R_r, \theta_f)$ by converting a position of the third vehicle 13, which is a target vehicle detected by another vehicle, into the host vehicle coordinate system.

The coordinate conversion of the third vehicle 13 by the first vehicle 11 may be calculated based on Equation 1 below.

$$[\text{Equation 1}]$$

$$\begin{bmatrix} x_f \\ y_f \end{bmatrix} = \begin{bmatrix} \cos(\theta_e - \theta_v) & \sin(\theta_e - \theta_v) \\ \sin(\theta_e - \theta_v) & \cos(\theta_e - \theta_v) \end{bmatrix} \begin{bmatrix} R_t\cos\theta_t \\ R_t\sin\theta_t \end{bmatrix} + \begin{bmatrix} R_s\cos\theta_s \\ R_s\sin\theta_s \end{bmatrix}$$

$$R_f = \sqrt{x_f^2 + y_f^2}$$

$$\theta_f = \tan^{-1}\frac{y_f}{x_f}$$

The coordinate is converted by using a traveling direction angle between the first vehicle 11 and the second vehicle 12, a straight distance $R_s$ between the first vehicle 11 and the second vehicle 12, a straight distance $R_t$ between the second vehicle 12 and the third vehicle 13, and rotation angles $\theta_s$ and $\theta_t$ with respect to the third vehicle.

As illustrated in FIG. 8B, in case that there is no terrestrial magnetism sensor or an error is large, the driving control system of the vehicle 10 converts the coordinate by using the lane or the like.

A fourth vehicle 14 calculates a direction angle difference by sharing a traveling angle based on the lane by using the optional field of the basic safety message (BSM).

When the fourth vehicle 14 travels in a forty-first direction D41 that is the traveling direction, the fourth vehicle 14 calculates a direction angle θ4 with respect to the forty-first direction D41, which is the traveling direction, based on a tangential direction D42 with respect to the lane.

When a fifth vehicle 15 travels in a fifty-first direction D51 that is the traveling direction, the fifth vehicle 15 calculates a direction angle θ5 with respect to the fifty-first direction D51, which is the traveling direction, based on tangential directions D52 and D53 with respect to the lane.

Assuming that an equation of the lane of the fourth vehicle 14 is f(o) and an equation of the lane of the fifth vehicle 15, which is the identified matched vehicle, is g(o), a change in tangential gradient of the lane is $\tan^{-1}(f'(x))$ - $\tan^{-1}(f'0)$.

A rotation angle for rotating and converting an obstacle position into the host vehicle coordinate system is calculated based on a change in tangential gradient of the lane, $\tan^{-1}(f'0)$ and $\tan^{-1}(g'0)$, the difference between the traveling direction and the lane obtained by the vehicle.

[Equation 2]

$$\text{Rotation angle} = \tan^{-1}(f'(x)) - \tan^{-1}(f'(0)) - \tan^{-1}(g'(0))$$

Therefore, the vehicle 10 may obtain a position of an obstacle in the host vehicle coordinate system, which is detected in the identified matched vehicle, by performing the translation by $R_s$ and $\theta_s$ that is host vehicle sensor information.

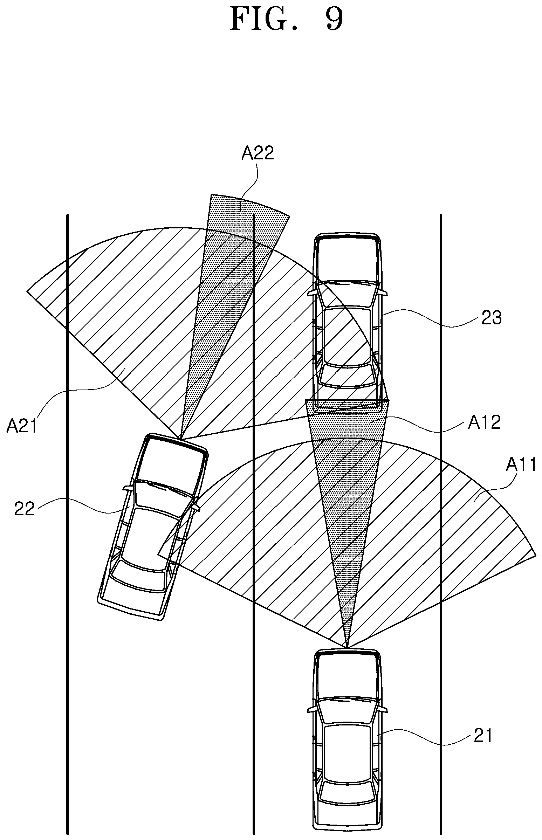

FIG. 9 is an exemplified view illustrating another example related to vehicle matching of the driving control system using sensor fusion between vehicles according to the embodiment of the present disclosure.

The driving control system transmits and receives the basic safety message (BSM) to and from the vehicle within a predetermined distance for a predetermined period, detects the number plate from the image captured by the camera unit 170 by using the image recognition unit 120, compares the number plate with the vehicle identification number included in the basic safety message, and matches the vehicle. In case that the recognition of the number plate may be performed, the driving control system matches the vehicle based on the number plate. In case that the recognition of the number plate cannot be performed, the driving control system matches the vehicle based on the position or operation of the vehicle.

As illustrated in FIG. 9, when the matching and coordinate conversion in respect to another vehicle are completed, the driving control system fuses and uses sensor data of another vehicle.

The control unit 110 acquires information on the surrounding environment by fusing data obtained by the detection unit 160 and the sensor data of another vehicle and controls the autonomous driving by detecting approach of another vehicle.

The first vehicle 21 matches the vehicle by recognizing the number plate in respect to the third vehicle 23 and matches the vehicle based on the position in respect to the second vehicle 22.

The first vehicle 21 receives the basic safety message of the second vehicle 22 and the third vehicle 23 and uses the sensor data, thereby increasing the number of available sensors.

The first vehicle 21 may also acquire information on a vehicle disposed forward of the third vehicle 23 by using the sensor data of the matched vehicle.

Therefore, the driving control system may use sensors larger in number than the provided sensors, produce data having high reliability, and precisely control driving in accordance with a motion (operation) of an adjacent vehicle.

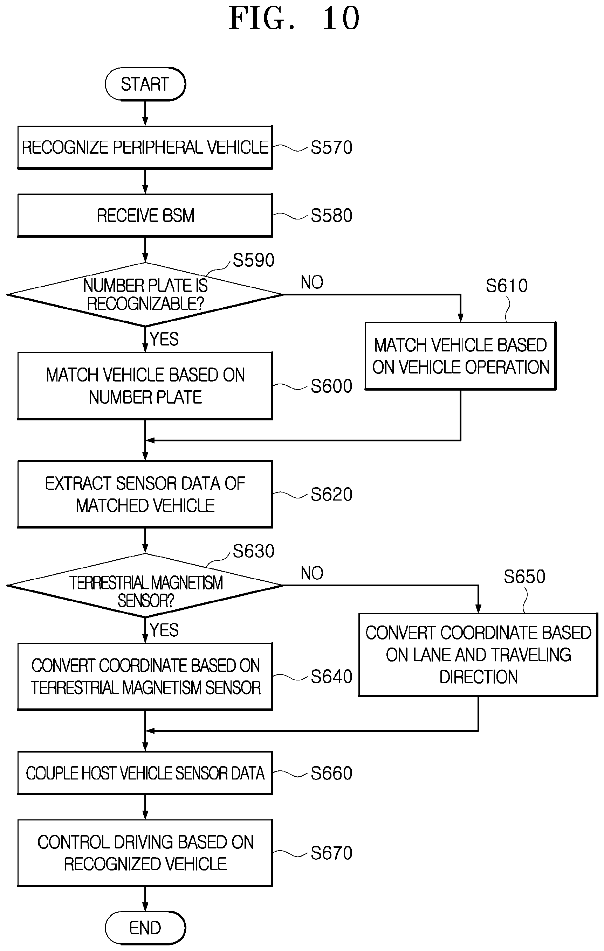

FIG. 10 is a flowchart illustrating a driving control method of the driving control system using sensor fusion between vehicles according to the embodiment of the present disclosure.

As illustrated in FIG. 10, the driving control system of the vehicle recognizes a peripheral vehicle by using an image captured by the camera (S570).

The driving control system transmits and receives the basic safety message (BSM) to and from the vehicle within a predetermined distance for a predetermined period (S580).

The driving control system detects the number plate from the image captured by the camera unit 170 by using the image recognition unit 120 and recognizes the vehicle identification number from the number plate.

In case that the recognition of the number plate may be performed, the driving control system matches the vehicle based on the number plate (S600). In case that the recognition of the number plate cannot be performed, the driving control system matches the vehicle based on the position or operation of the vehicle (S610).

As described above, the driving control system may match the vehicle identification number with the vehicle identification number included in the basic safety message and match the vehicle by performing the tracking based on the position or operation of the vehicle.

When the vehicle matching is completed, the driving control system extracts sensor data included in the optional field of the basic safety message of the matched vehicle (S620).

Because the driving control system knows information on the relative position between the vehicles after the matching is completed, the driving control system may improve obstacle recognition performance by transmitting the data acquired from the sensors.

Because the position information of the sensor data is determined based on the position of the vehicle, the driving control system converts data of another vehicle into the coordinate based on the host vehicle.

Because the driving control system requires rotation information for the coordinate conversion, the driving control system converts the coordinate by calculating conversion angle information based on the terrestrial magnetism sensor or lane.

In case that the terrestrial magnetism sensor is provided (S630), the coordinate is converted based on a measured value of the terrestrial magnetism sensor as described above with reference to FIG. 8A (S640). As illustrated in FIG. 8B, in case that no terrestrial magnetism sensor is provided, the coordinate is converted based on the lane and traveling direction (S650).

The driving control system couples the converted coordinate of another vehicle to a coordinate value of its own sensor (S660) and controls driving in response to the recognized operation of the vehicle, data, and the like (S670).

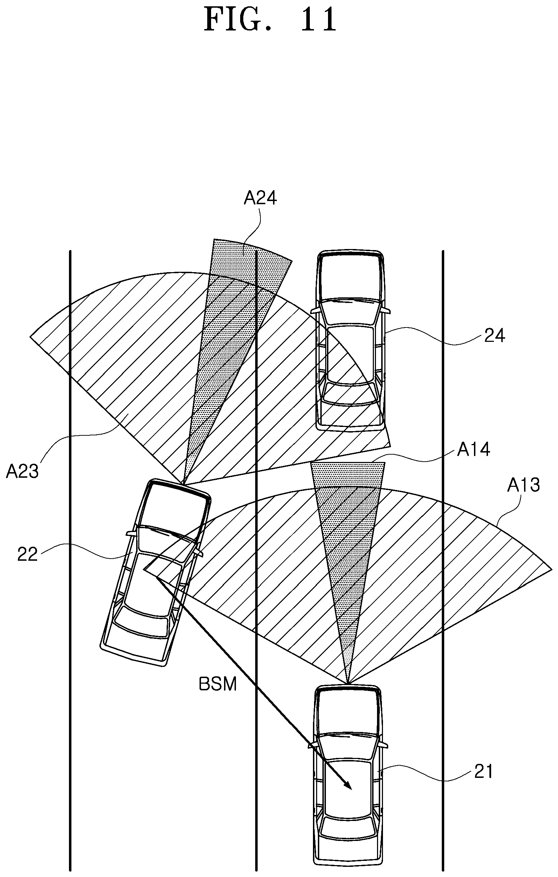

FIG. 11 is a view for explaining vehicle matching related to a non-recognized vehicle by the driving control system using sensor fusion between vehicles according to the embodiment of the present disclosure.

As illustrated in FIG. 11, the driving control system may determine whether the first vehicle 21 and the fourth vehicle 24 are present based on the sensor data of the basic safety message (BSM) received from the second vehicle 22 in a situation in which the fourth vehicle 24 positioned forward of the first vehicle 21 cannot be recognized.

During the process in which the first vehicle 21 travels, the first vehicle 21 recognizes the vehicle positioned at the front side based on the front image and detects the vehicle positioned in detection regions A13 and A14 by using the plurality of sensors.

However, even though the first vehicle 21 is positioned forward of the fourth vehicle 24, the fourth vehicle 24 sometimes cannot be recognized.

In case that the first vehicle 21 cannot recognize the fourth vehicle from the image, the fourth vehicle may be recognized by using the plurality of sensors. However, the fourth vehicle 24 cannot be recognized in case that the fourth vehicle 24 is positioned at a position deviating from the detection region of the sensor.

For example, abnormality may occur on the camera of the first vehicle 21, foreign substances may be attached to a front glass, a shape of the fourth vehicle cannot be normally recognized, and the fourth vehicle 24 cannot be detected from the image because of at least one of weather situations. In addition, the first vehicle 21 cannot clearly identify a front state in a weather situation such as heavy snow, fog, or the like, and the vehicle sometimes cannot be recognized.

In case that the fourth vehicle 24 is positioned at a position out of the detection regions A13 and A14 in the situation in which the fourth vehicle 24 cannot be recognized from the image as described above, the first vehicle 21 may determine that no vehicle is present at the front side without recognizing the fourth vehicle 24.

In this situation, in case that the first vehicle 21 accelerates after determining that no other vehicle is present at the front side, there may occur an accident in which the first vehicle 21 and the fourth vehicle 24 collide with each other. Because the fourth vehicle is positioned in the detection region, a braking distance may increase in an acceleration situation, and a collision accident may occur even though the first vehicle 21 detects the fourth vehicle while accelerating and performs braking.

In this case, even though the first vehicle 21 determines that no vehicle is present at the front side without recognizing the fourth vehicle 24, the first vehicle 21 may identify the vehicle detected and matched by the second vehicle 22 through the sensor data included in the basic safety message of the second vehicle 22 before the first vehicle 21 accelerates.

The driving control system determines whether information on a non-recognized vehicle exists in the data received from the second vehicle 22, and the driving control system controls driving based on data on the corresponding vehicle in case that the information on the non-recognized vehicle exists.

In addition, the driving control system determines reliability related to the data of the second vehicle 22 and controls driving in accordance with the reliability. The driving control system determines that the fourth vehicle 24 is present when the reliability related to the data of the second vehicle 22 is high.

In case that the reliability is high, the driving control system estimates a position of the fourth vehicle 24 based on the sensor data and controls driving in response to the position of the fourth vehicle 24.

The driving control system restricts acceleration so that the acceleration is not performed even though the reliability of the data of the second vehicle 22 is high, and the driving control system controls the vehicle based on the sensor data of the received basic safety message.

In case that the reliability related to the data of the second vehicle 22 is low, the driving control system restricts a maximum velocity. In addition, the driving control system prepares braking to decelerate the vehicle immediately after the vehicle is detected by the sensor in order to prepare for a case in which the fourth vehicle 24 is actually positioned forward of the vehicle. For example, the driving control system may prepare braking by charging a brake with pressure.

The driving control system may request the second vehicle 22 to precisely detect the position of the vehicle in respect to the fourth vehicle 24 that is the non-recognized vehicle. In addition, the driving control system may request the data related to the fourth vehicle 24 from another adjacent vehicle.

In case that the driving control system receives the data related to the non-recognized fourth vehicle 24 through the plurality of basic safety messages received from the plurality of vehicles, the driving control system compares the data of the second vehicle, determines the position of the fourth vehicle 24, and recognizes the vehicle.

The driving control system estimates the position of the fourth vehicle 24 based on the sensor data and controls driving in response to the position of the fourth vehicle 24.

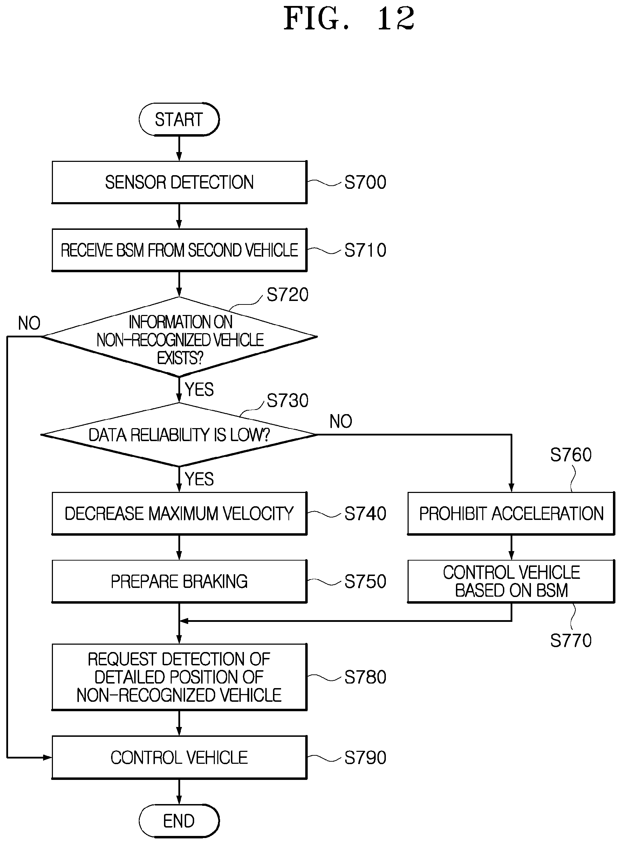

FIG. 12 is a flowchart illustrating a non-recognized vehicle matching method of the driving control system using sensor fusion between vehicles according to the embodiment of the present disclosure.

As illustrated in FIG. 12, the driving control system recognizes the vehicle based on the image captured by the camera and detects a peripheral vehicle based on the plurality of sensors (S700). The driving control system performs the vehicle matching based on the number plate of the vehicle recognized from the image.

The control unit 110 of the driving control system receives data from an adjacent vehicle by transmitting and receiving the basic safety message (BSM) to and from the adjacent vehicle.

The first vehicle 21 determines whether information on a non-recognized vehicle exists based on the basic safety message (BSM) of the second vehicle 22 (S720).

In case that the second vehicle 22 detects the fourth vehicle 24, which is a preceding vehicle traveling on the same lane as the first vehicle 21, in the situation in which the first vehicle 21 cannot detect a front vehicle, the first vehicle 21 may identify information on the fourth vehicle through the sensor data of the second vehicle 22.

The control unit 110 controls the vehicle, which corresponds to the fourth vehicle 24 that is a non-recognized vehicle, based on data reliability of the second vehicle. The reliability refers to data set up as a level or numerical value based on whether the vehicle, which has transmitted the data, is the matched vehicle, the stability according to the transmission or reception of data, the accuracy of the vehicle data, and the distance between the vehicles.

The control unit 110 determines a level related to reliability of the second vehicle 22. When the reliability is lower than a predetermined value, the control unit 110 restricts a velocity by reducing a maximum velocity (S740) and prepares braking to immediately decelerates the vehicle (S750). In a situation in which it is impossible to determine whether the fourth vehicle 24, which is a non-recognized vehicle, is actually positioned at the front side, the control unit restricts the velocity of the vehicle and prepares braking to brake the vehicle immediately after the vehicle is detected by the sensor in consideration of a likelihood of a collision.

Meanwhile, in case that the reliability related to the data of the second vehicle 22 is as high as a predetermined value or more, the control unit 110 determines that the fourth vehicle 24 is positioned at the front side and prohibits acceleration in consideration of a likelihood of a collision in an acceleration situation (S760).

The control unit 110 controls the vehicle based on the received basic safety message (BSM) (S770).

The control unit 110 requests detailed information related to the fourth vehicle 24, which is a non-recognized vehicle, from another adjacent vehicle (S780), estimates the position of the fourth vehicle 24 based on the received data, and controls the vehicle (S790). The control unit 110 determines that the fourth vehicle 24 is positioned at the estimated position even though the fourth vehicle 24 is not actually detected, and the control unit 110 controls driving based on the determination result.

When the front vehicle is detected by the image or sensor while the front vehicle travels, the driving control system performs the vehicle matching based on any one of the recognition of the number plate, the vehicle position, and the vehicle operation. When the driving control system determines the detected vehicle as the fourth vehicle 24, the driving control system sorts the fourth vehicle into matched vehicles and tracks the operation of the fourth vehicle 24. In addition, the driving control system receives the basic safety message of the fourth vehicle and controls the first vehicle.

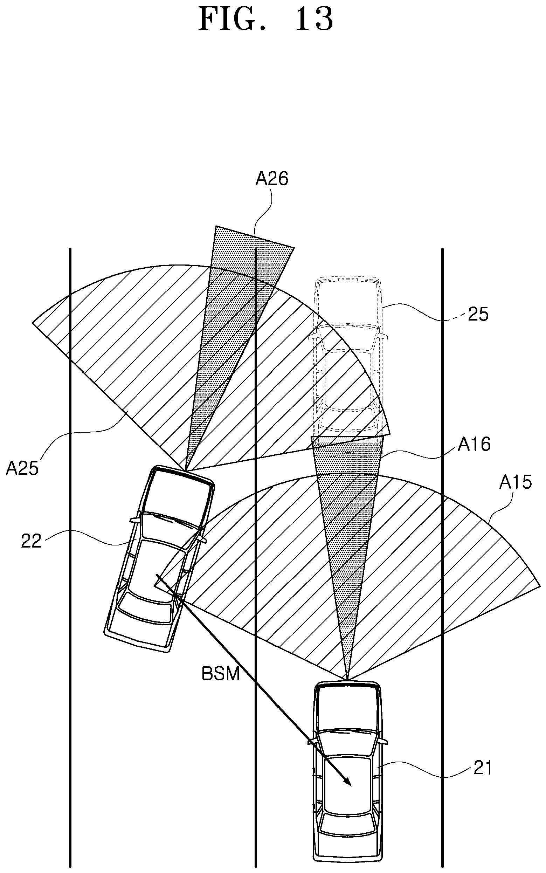

FIG. 13 is a view for explaining information correction related to an erroneously recognized vehicle by the driving control system using sensor fusion between vehicles according to the embodiment of the present disclosure.

As illustrated in FIG. 13, the driving control system detects a fifth vehicle 25 positioned forward of the first vehicle 21. When the driving control system determines that the fifth vehicle 25 is present in a detection region A16 by the sensor in a state in which the fifth vehicle 25 cannot be recognized from the image, the driving control system determines that the fifth vehicle is present at the corresponding position.

To identify the fifth vehicle 25, the driving control system determines whether the fifth vehicle 25 is present based on the sensor data of the basic safety message (BSM) received from the second vehicle 22.

Whether the second vehicle 22 detects the fifth vehicle 25 is determined based on the sensor data included in the basic safety message of the second vehicle 22. In case that the second vehicle 22 cannot detect the fifth vehicle, the fifth vehicle 25 detected by the sensor may be determined as a ghost vehicle, i.e., a vehicle that is not actually present.

In case that there is no vehicle that detects the fifth vehicle based on the basic safety message or in case that the vehicle is not included even in the data track candidate of the matched vehicle, the driving control system determines the fifth vehicle 25 as a ghost vehicle.

Before the driving control system determines the fifth vehicle as the ghost vehicle, the driving control system resets a vehicle recognition critical value so that the vehicle is detected again in a wider range. The driving control system may change detection sensitivity or detection range of the sensor and change recognition setting according to the image.

After the reset, the driving control system redetermines whether the fifth vehicle 25 is detected. In case that the fifth vehicle is detected, the driving control system determines that the fifth vehicle is actually present, and the driving control system controls the vehicle based on the sensor data.

Meanwhile, when the fifth vehicle is not detected after the driving control system resets the critical value, the driving control system determines the fifth vehicle 25 as a ghost vehicle. The driving control system prohibits acceleration in consideration of a case in which the fifth vehicle is present, and the driving control system controls the vehicle based on the received basic safety message.

The driving control system requests detailed information related to the fifth vehicle based on a basic safety message received from an adjacent vehicle, reidentifies whether the fifth vehicle is detected by another vehicle, identifies whether the vehicle is included in the track candidate of another vehicle, and determines the fifth vehicle as a ghost vehicle. Meanwhile, when the fifth vehicle is detected by the plurality of vehicles, the driving control system may match the fifth vehicle.

When a new vehicle is detected by the sensor or image even after the fifth vehicle is determined as a ghost vehicle, the driving control system identifies whether the new vehicle is the fifth vehicle by means of vehicle matching, and the driving control system controls the driving of the vehicle based on the identification result.

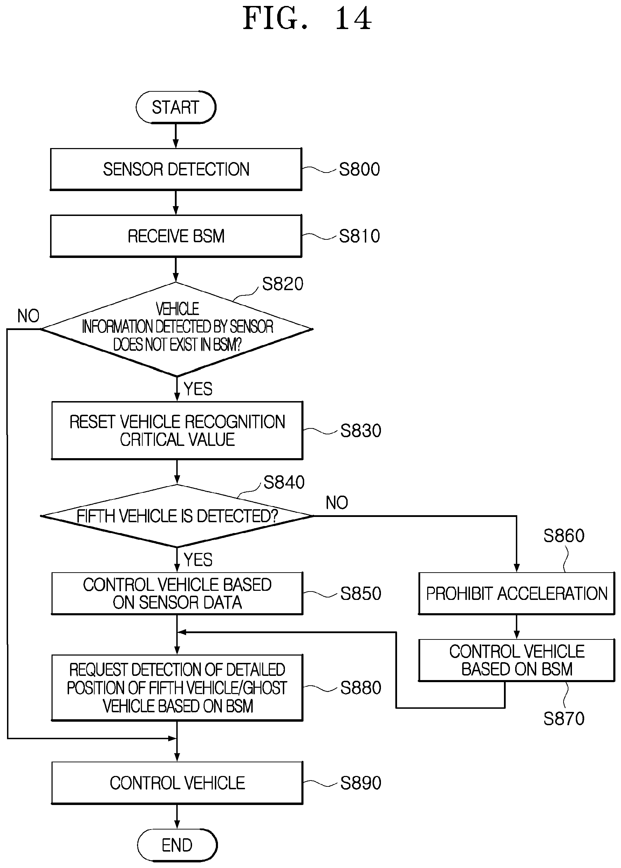

FIG. 14 is a flowchart illustrating a method of performing information correction on an erroneously recognized vehicle by the driving control system using sensor fusion between vehicles according to the embodiment of the present disclosure.

As illustrated in FIG. 14, the driving control system detects the fifth vehicle 25 positioned at the front side by using the sensor (S800).

The control unit 110 receives the basic safety message (BSM) from the second vehicle 22 (S810) and determines whether the fifth vehicle 25 is present based on the sensor data included in the basic safety message (S820).

The control unit 110 may determine whether the second vehicle 22 detects the fifth vehicle 25 or whether the fifth vehicle is matched based on the sensor data included in the basic safety message of the second vehicle 22. The driving control system determines positions of objects detected based on its own reference by converting the sensor data of the second vehicle into the coordinate.

In case that the data of the fifth vehicle 25 are not present in the sensor data of the second vehicle 22, i.e., in case that the second vehicle cannot detect the fifth vehicle, the control unit 110 resets the critical value related to the recognition of the vehicle and redetermines the vehicle in response to a case in which the signal is erroneously detected (S830).

The control unit 110 resets the vehicle recognition critical value and then determines whether the fifth vehicle 25 is detected by the detection unit 160 (S840). When the fifth vehicle is detected, the control unit performs the vehicle matching by means of the data processing unit 130 and controls the driving of the vehicle based on the sensor data (S850).

Meanwhile, when the fifth vehicle is not detected after the control unit resets the critical value, the control unit determines the fifth vehicle 25 as a ghost vehicle. However, the control unit 110 prohibits acceleration in consideration of a case in which the fifth vehicle is present (S860), and the control unit controls the vehicle based on the received basic safety message (S870).

The control unit 110 requests detailed information on the fifth vehicle based on a basic safety message received from an adjacent vehicle (S880).

In case that the fifth vehicle is detected and determined as a ghost vehicle, the control unit 110 identifies a detailed position through the basic safety message, reidentifies whether the fifth vehicle is a ghost vehicle, and then control the vehicle (S890).

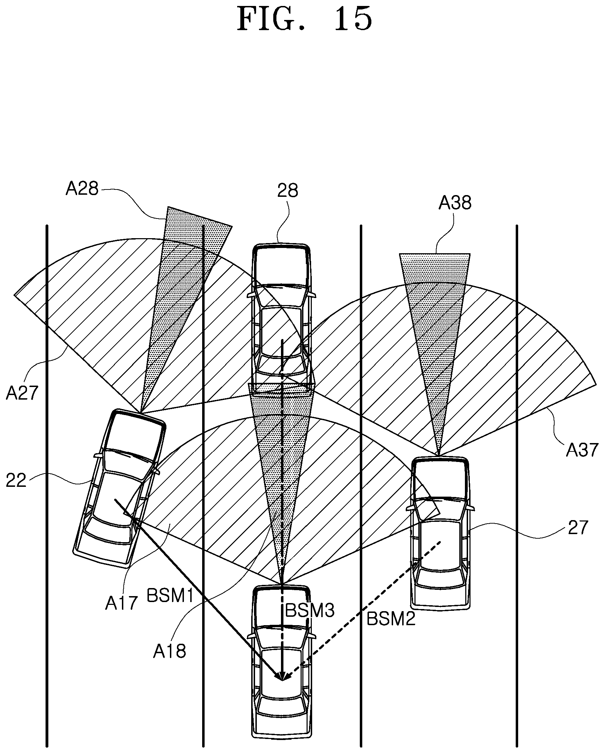

FIG. 15 is a view for explaining vehicle matching using sensor data by the driving control system using sensor fusion between vehicles according to the embodiment of the present disclosure.

The autonomous driving controls the driving by recognizing an adjacent vehicle or object based on received data and data detected by the vehicle instead of the driver. Therefore, the stability and reliability need to support the autonomous driving. During the autonomous driving, the vehicle may set up steps related to the autonomous driving and set up a restriction to operations performed in respective steps. The steps of the autonomous driving may be divided into 5 steps. Steps 0 to 2 are limited to operations that assist the driver's driving, and Steps 4 or more drive the vehicle without the driver's intervention and are states in which the driver's intervention is performed as necessary. Step 5 corresponds to perfect autonomous driving.

As described above, there may occur a problem in that a vehicle, which is not present, is detected or a vehicle, which is present, cannot be detected. Therefore, because of the limitation in recognition performance, the autonomous vehicle performs the step of assisting the driver's driving control.

However, the driving control system according to the present disclosure may perform the vehicle matching by recognizing the number plate from the image and using the basic safety message and identify a plurality of erroneously detected or non-recognized vehicles by receiving sensor data of another vehicle, thereby correcting an error.

The driving control system may recognize the non-recognized object by receiving sensor data of another vehicle through a basic safety message even in respect to an object positioned at a blind spot.

Therefore, the driving control system may use the data detected by not only the sensor of the host vehicle but also a sensor of another vehicle, such that a size of a detectable region is greatly increased. Further, the driving control system may redetermine the erroneously detected or non-recognized object, thereby more accurately recognizing an object and controlling driving.

As illustrated in FIG. 15, during the driving, the driving control system receives a basic safety message BSM1 from the second vehicle 22, a basic safety message BSM2 from a seventh vehicle 27, and a basic safety message BSM3 from an eighth vehicle 28. The driving control system performs the vehicle matching by receiving the data of the vehicle through the received basic safety message (BSM).

When the vehicle matching is completely performed on the adjacent vehicle, the driving control system may share the data through the basic safety message, identify the traveling states of the vehicle, and control the driving in response to the operations of the vehicles.

Even though the front vehicle is not recognized, the driving control system may receive the basic safety messages of the second vehicle 22 and the seventh vehicle 27, which are peripheral vehicles, convert the sensor data into the coordinate, and identify the coordinate. Therefore, the driving control system may reidentify whether the corresponding vehicle is present and estimate the position of the vehicle, thereby solving a problem caused by non-recognition or erroneous recognition.

Therefore, the driving control system may perform the autonomous driving in higher steps as the recognition performance is improved.

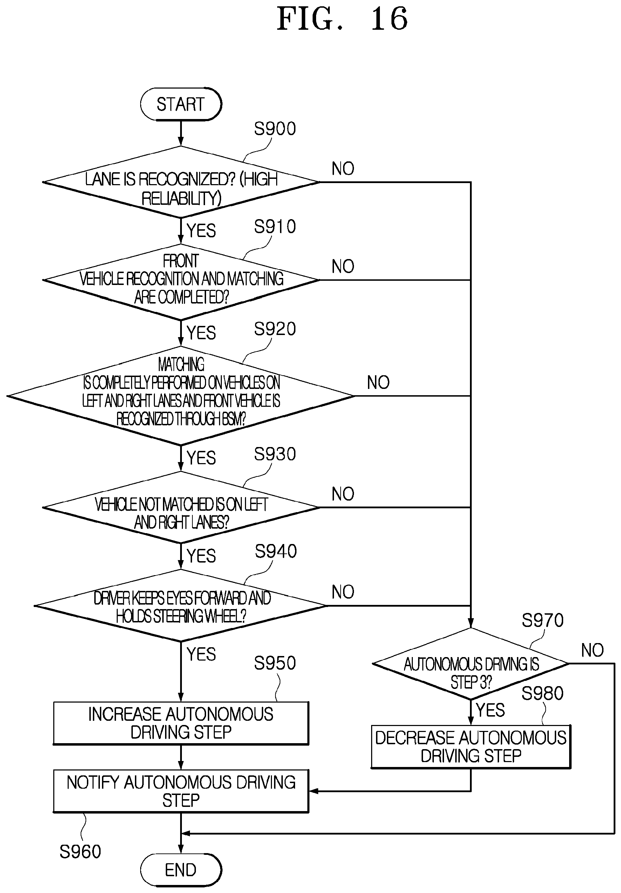

FIG. 16 is an exemplified view illustrating an example related to vehicle matching by the driving control system using sensor fusion between vehicles according to the embodiment of the present disclosure.

As illustrated in FIG. 16, the driving control system determines recognition performance and changes an autonomous driving step.

The image recognition unit 120 recognizes a lane based on the image captured by the camera of the camera unit 170. In addition, the image recognition unit 120 extracts the vehicle identification number from the number plate by recognizing the front vehicle from the image.

The data processing unit 130 performs the vehicle matching based on the vehicle identification number through the sensor data included in the basic safety message received through the communication unit 150. The data processing unit 130 may match the vehicle based on the operation or position of the object vehicle.

To determine the recognition performance, the control unit 110 determines whether the lane is recognized by the image recognition unit 120 (S900) and determines whether the front vehicle is recognized and whether the matching is completely performed on the front vehicle (S910).

The control unit 110 determines whether the matching is completely performed on the vehicle positioned on the left or right lane and determines whether the front vehicle is recognized by another vehicle through the basic safety message received from the matched vehicle (S920).

The control unit 110 determines whether the vehicle, which is not matched, is present among the vehicles positioned on the left and right lanes (S930). The control unit 110 stores the data related to the matched vehicle in the data unit 180 and manages the matched vehicle.

In addition, the control unit 110 determines whether the driver keeps eyes forward during the driving and determines whether the driver holds the steering wheel (S940).

The control unit 110 may capture an image of the interior of the vehicle by using the camera, and the image recognition unit 120 may detect whether the driver keeps eyes forward from the image and whether the driver holds the steering wheel.

The control unit 110 increases the autonomous driving step by 1 step when a plurality of items for determining the recognition performance is all satisfied (S950).

Meanwhile, in case that even any one of the plurality of items is not satisfied, the control unit 110 identifies the current autonomous driving step and decreases the autonomous driving step by 1 step (S980) when the current autonomous driving step is Step 3 of the autonomous driving (S970). The control unit 110 may maintain the autonomous driving step in case that the autonomous driving step is Step 2.

When the autonomous driving step is changed by increasing or decreasing, the control unit 110 predicts and outputs a notification in accordance with a change in autonomous driving step (S960).

Even after the autonomous driving step is increased, the control unit 110 periodically redetermines the recognition performance and adjusts the autonomous driving step.

While the present disclosure has been described with reference to the embodiment illustrated in the drawings, the embodiment is described just for illustration, and those skilled in the art to the present technology pertains will understand that various modifications of the embodiment and any other embodiment equivalent thereto are available. Accordingly, the true technical protection scope of the present disclosure should be determined by the appended claims.

Although exemplary embodiments of the disclosure have been disclosed for illustrative purposes, those skilled in the art will appreciate that various modifications, additions and substitutions are possible, without departing from the scope of the disclosure as defined in the accompanying claims. Thus, the true technical scope of the disclosure should be defined by the following claims.

**Claims**

1. A driving control system of a host vehicle (10) comprising:

a camera unit (170) comprising a plurality of cameras and configured to capture an image of a periphery of the host vehicle (10);

a detection unit (160) configured to measure a position of the host vehicle (10) and detect an object at the periphery of the host vehicle (10);

an image recognition unit (120) configured to analyze the image captured by the camera unit (170), recognize a number plate of a second vehicle positioned at the periphery, and extract a vehicle identification number of the second vehicle;

a communication unit (150) configured to include a vehicle identification number of the host vehicle (10) and sensor data acquired from the detection unit (160) in an optional field of a basic safety message, BSM, communicate with a plurality of vehicles positioned within a predetermined distance by a vehicle to anything, V2X, method, and receive a plurality of BSMs from the plurality of vehicles including the second vehicle;

a data processing unit (130) configured to match the second vehicle and a BSM of the second vehicle based on at least one of the vehicle identification number, a position and an operation of the second vehicle;

a coordinate conversion unit (140) configured to extract sensor data from the BSM of the second vehicle on which matching is completely performed, the coordinate conversion unit (140) being configured to convert the sensor data of the second vehicle into a coordinate based on the host vehicle (10); and

a control unit (110) configured to control driving based on information on the periphery of the host vehicle (10) acquired by fusing data of the detection unit (160) and the converted sensor data of the second vehicle based on a result of matching on the second vehicle,

wherein the coordinate conversion unit (140) acquires a coordinate in respect to a fourth vehicle detected by the second vehicle from the sensor data included in the BSM of the second vehicle and converts a coordinate of the fourth vehicle into a coordinate based on the host vehicle (10),

wherein the driving control system further comprises a terrestrial magnetism sensor, and the coordinate conversion unit (140) converts a coordinate value of the fourth vehicle detected by the second vehicle into a coordinate based on a traveling direction angle of the host vehicle (10) and a traveling direction angle of the second vehicle, the traveling direction angle of the second vehicle being transmitted from the second vehicle, based on a north side, N-pole, detected by the terrestrial magnetism sensor, and

wherein the data processing unit (130) is configured to compare the extracted vehicle identification number of the second vehicle and the vehicle identification number included in the plurality of BSMs, and match the BSM coincident with the vehicle identification number with the second vehicle.

2. The driving control system of claim 1, wherein the data processing unit (130) analyzes positions and operations of the plurality of vehicles based on information included in the plurality of BSMs in respect to a third vehicle having a number plate that is unrecognizable among the plurality of vehicles, compares the analysis result with data of the third vehicle detected by the detection unit (160), and matches the third vehicle.

3. The driving control system of claim 1 or 2, wherein the data processing unit (130) compares a position of the third vehicle detected by the detection unit (160) with position information included in the plurality of BSMs and matches the BSM coincident in an error range with the third vehicle.

4. The driving control system of any one of claims 1 to 3, wherein the data processing unit (130) sets up one or more matching candidates by comparing operation information of the third vehicle detected by the detection unit (160) with operation information included in the plurality of BSMs, accumulates the operation information, and matches a BSM, which is coincident in an error range among the matching candidates, with the third vehicle.

5. The driving control system of any one of claims 1 to 4, wherein the data processing unit (130) detects a position of a traveling lane and an object, such as a guard rail, positioned on the traveling lane by using the detection unit (160), compares object detection information included in the plurality of BSMs, and matches the BSM and the third vehicle.

6. The driving control system of any one of claims 1 to 5, wherein the data processing unit (130) produces and registers a new track in respect to the matched vehicle, changes a matching candidate, which has succeeded matching for a predetermined period of time among the one or more matching candidates included in the matched data, to identified matching, converts the identified matching, which is not matched for the period of time among one or more identified matching, into a matching candidate, eliminates a track in respect to the matching candidate that is not matched for the period of time among one or more matching candidates, and manages a result of matching on the plurality of vehicles.

7. The driving control system of any one of claims 1 to 6, wherein the coordinate conversion unit (140) compensates for a rotation by rotating a traveling direction angle of the host vehicle (10) based on the N-pole by a difference of a rotation axis with respect to the fourth vehicle, compensates for a translation by using a distance between the host vehicle (10) and the second vehicle, a distance between the second vehicle and the fourth vehicle, and a rotation angle with respect to the fourth vehicle, and converts a coordinate in respect to the fourth vehicle into a coordinate.

8. The driving control system of any one of claims 1 to 7, wherein the coordinate conversion unit (140) calculates a change in tangential gradient of the lane and converts the coordinate of the fourth vehicle by using a rotation angle calculated by using a difference between the lane and the traveling direction.

**Patentansprüche**

1. Fahrsteuerungssystem eines eigenen Fahrzeugs (10), umfassend:

eine Kameraeinheit (170), die eine Mehrzahl von Kameras umfasst und dazu eingerichtet ist, ein Bild eines Umfelds des eigenen Fahrzeugs (10) aufzunehmen;
eine Detektionseinheit (160), die dazu eingerichtet ist, eine Position des eigenen Fahrzeugs (10) zu messen und ein Objekt im Umfeld des eigenen Fahrzeugs (10) zu detektieren;
eine Bilderkennungseinheit (120), die dazu eingerichtet ist, das von der Kameraeinheit (170) aufgenommene Bild zu analysieren, ein Nummernschild eines zweiten Fahrzeugs, das im Umfeld positioniert ist, zu erkennen und eine Fahrzeugidentifizierungsnummer des zweiten Fahrzeugs zu extrahieren;
eine Kommunikationseinheit (150), die dazu eingerichtet ist, eine Fahrzeugidentifizierungsnummer des eigenen Fahrzeugs (10) und von der Detektionseinheit (160) erfasste Sensordaten in ein optionales Feld einer Basis-Sicherheitsnachricht, BSM, aufzunehmen, mit einer Mehrzahl von Fahrzeugen, die innerhalb einer vorbestimmten Distanz positioniert sind, durch ein Fahrzeug-zu-Allem-, V2X-, Verfahren zu kommunizieren und eine Mehrzahl von BSMs von der Mehrzahl von Fahrzeugen einschließlich des zweiten Fahrzeugs zu empfangen;
eine Datenverarbeitungseinheit (130), die dazu eingerichtet ist, das zweite Fahrzeug und eine BSM des zweiten Fahrzeugs basierend auf mindestens einem aus der Fahrzeugidentifizierungsnummer, einer Position und einem Betriebszustand des zweiten Fahrzeugs abzugleichen;
eine Koordinatenumwandlungseinheit (140), die dazu eingerichtet ist, Sensordaten aus der BSM des zweiten Fahrzeugs zu extrahieren, für das der Abgleich vollständig durchgeführt ist, wobei die Koordinatenumwandlungseinheit (140) dazu eingerichtet ist, die Sensordaten des zweiten Fahrzeugs in eine Koordinate basierend auf dem eigenen Fahrzeug (10) umzuwandeln; und
eine Steuereinheit (110), die dazu eingerichtet ist, ein Fahren basierend auf Informationen über das Umfeld des eigenen Fahrzeugs (10) zu steuern, die durch Fusionieren von Daten der Detektionseinheit (160) und den umgewandelten Sensordaten des zweiten Fahrzeugs basierend auf einem Ergebnis des Abgleichs mit dem zweiten Fahrzeug erfasst werden,
wobei die Koordinatenumwandlungseinheit (140) eine Koordinate in Bezug auf ein viertes Fahrzeug, das durch das zweite Fahrzeug detektiert wird, aus den in der BSM des zweiten Fahrzeugs enthaltenen Sensordaten erfasst und eine Koordinate des vierten Fahrzeugs in eine Koordinate basierend auf dem eigenen Fahrzeug (10) umwandelt,
wobei das Fahrsteuerungssystem ferner einen Erdmagnetfeldsensor umfasst, und die Koordinatenumwandlungseinheit (140) einen Koordinatenwert des durch das zweite Fahrzeug detektierten vierten Fahrzeugs in eine Koordinate basierend auf einem Fahrtrichtungswinkel des eigenen Fahrzeugs (10) und einem Fahrtrichtungswinkel des zweiten Fahrzeugs umwandelt, wobei der Fahrtrichtungswinkel des zweiten Fahrzeugs von dem zweiten Fahrzeug übertragen wird, basierend auf einer durch den Erdmagnetfeldsensor detektierten Nordrichtung, N-Pol, und
wobei die Datenverarbeitungseinheit (130) dazu eingerichtet ist, die extrahierte Fahrzeugidentifizierungsnummer des zweiten Fahrzeugs und die in der Mehrzahl von BSMs enthaltene Fahrzeugidentifizierungsnummer zu vergleichen und die BSM, die mit der Fahrzeugidentifizierungsnummer übereinstimmt, mit dem zweiten Fahrzeug abzugleichen.

2. Fahrsteuerungssystem nach Anspruch 1, wobei die Datenverarbeitungseinheit (130) Positionen und Betriebszustände der Mehrzahl von Fahrzeugen basierend auf in der Mehrzahl von BSMs enthaltenen Informationen in Bezug auf ein drittes Fahrzeug mit einem Nummernschild, das unter der Mehrzahl von Fahrzeugen nicht erkennbar ist, analysiert, das Analyseergebnis mit Daten des dritten Fahrzeugs, die von der Detektionseinheit (160) detektiert wurden, vergleicht und das dritte Fahrzeug abgleicht.

3. Fahrsteuerungssystem nach Anspruch 1 oder 2, wobei die Datenverarbeitungseinheit (130) eine durch die Detektionseinheit (160) detektierte Position des dritten Fahrzeugs mit in der Mehrzahl von BSMs enthaltenen Positionsinformationen vergleicht und die BSM, die innerhalb eines Fehlerbereichs übereinstimmt, mit dem dritten Fahrzeug abgleicht.

4. Fahrsteuerungssystem nach einem der Ansprüche 1 bis 3, wobei die Datenverarbeitungseinheit (130) durch Vergleichen von Betriebszustandsinformationen des durch die Detektionseinheit (160) detektierten dritten Fahrzeugs mit in der Mehrzahl von BSMs enthaltenen Betriebszustandsinformationen einen oder mehrere Abgleichkandidaten festlegt, die Betriebszustandsinformationen akkumuliert und eine BSM, die in einem Fehlerbereich unter den Abgleichkandidaten übereinstimmt, mit dem dritten Fahrzeug abgleicht.

5. Fahrsteuerungssystem nach einem der Ansprüche 1 bis 4, wobei die Datenverarbeitungseinheit (130) eine Position einer Fahrspur und ein Objekt, wie etwa eine Leitplanke, das auf der Fahrspur angeordnet ist, unter Verwendung der Detektionseinheit (160) detektiert, in der Mehrzahl von BSMs enthaltene Objektdetektionsinformationen vergleicht und die BSM mit dem dritten Fahrzeug abgleicht.

6. Fahrsteuerungssystem nach einem der Ansprüche 1 bis 5, wobei die Datenverarbeitungseinheit (130) eine neue Spur in Bezug auf das abgeglichene Fahrzeug erzeugt und registriert, einen Abgleichkandidaten, der für eine vorbestimmte Zeitspanne unter dem einen oder den mehreren Abgleichkandidaten, die in den abgeglichenen Daten enthalten sind, erfolgreich abgeglichen wurde, in einen identifizierten Abgleich ändert, den identifizierten Abgleich, der für die Zeitspanne unter einem oder mehreren identifizierten Abgleichen nicht abgeglichen wird, in einen Abgleichkandidaten umwandelt, eine Spur in Bezug auf den Abgleichkandidaten eliminiert, der für die Zeitspanne unter einem oder mehreren Abgleichkandidaten nicht abgeglichen wird, und ein Ergebnis des Abgleichs bei der Mehrzahl von Fahrzeugen verwaltet.

7. Fahrsteuerungssystem nach einem der Ansprüche 1 bis 6, wobei die Koordinatenumwandlungseinheit (140) eine Rotation durch Drehen eines Fahrtrichtungswinkels des eigenen Fahrzeugs (10) basierend auf dem N-Pol um eine Differenz einer Drehachse in Bezug auf das vierte Fahrzeug kompensiert, eine Translation unter Verwendung einer Distanz zwischen dem eigenen Fahrzeug (10) und dem zweiten Fahrzeug, einer Distanz zwischen dem zweiten Fahrzeug und dem vierten Fahrzeug und eines Drehwinkels in Bezug auf das vierte Fahrzeug kompensiert und eine Koordinate in Bezug auf das vierte Fahrzeug in eine Koordinate umwandelt.

8. Fahrsteuerungssystem nach einem der Ansprüche 1 bis 7, wobei die Koordinatenumwandlungseinheit (140) eine Änderung der Tangentensteigung der Fahrspur berechnet und die Koordinate des vierten Fahrzeugs unter Verwendung eines Drehwinkels umwandelt, der unter Verwendung einer Differenz zwischen der Fahrspur und der Fahrtrichtung berechnet wird.

**Revendications**

1. Système de commande de conduite d'un véhicule hôte (10) comprenant:

    une unité de caméras (170) comprenant plusieurs caméras et conçu pour capturer une image de la périphérie du véhicule hôte (10);
    une unité de détection (160) conçue pour mesurer la position du véhicule hôte (10) et détecter un objet à la périphérie du véhicule hôte (10);
    une unité de reconnaissance d'image (120) conçue pour analyser l'image capturée par l'unité de caméras (170), reconnaître la plaque d'immatriculation d'un deuxième véhicule situé à la périphérie et extraire le numéro d'identification de ce deuxième véhicule;
    une unité de communication (150) configurée pour inclure le numéro d'identification du véhicule hôte (10) et les données de capteur acquises par l'unité de détection (160) dans un champ optionnel d'un message de sécurité de base, BSM, pour communiquer avec une pluralité de véhicules situés à une distance prédéterminée à l'aide de la technologie véhicule à tout, V2X, et pour recevoir une pluralité de messages BSM provenant de la pluralité des véhicules, y compris le deuxième véhicule;
    une unité de traitement de données (130) configurée pour associer le deuxième véhicule et un BSM du deuxième véhicule sur la base d'au moins l'un élément parmi le numéro d'identification du véhicule, une position et un état de fonctionnement du deuxième véhicule;

une unité de conversion de coordonnées (140) configurée pour extraire les données provenant du BSM du deuxième véhicule dans lequel l'appariement est entièrement effectué, l'unité de conversion de coordonnées (140) étant configurée pour convertir les données de capteur du deuxième véhicule en coordonnées en fonction du véhicule hôte (10); et

une unité de commande (110) configurée pour commander la conduite en fonction d'informations relatives à la périphérie du véhicule hôte (10), acquises par fusion des données de l'unité de détection (160) et des données de capteur converties du deuxième véhicule, sur la base d'un résultat d'appariement concernant le deuxième véhicule,

dans lequel l'unité de conversion de coordonnées (140) acquiert une coordonnée relative à un quatrième véhicule détecté par le deuxième véhicule à partir des données de capteur contenues dans le BSM du deuxième véhicule et convertit une coordonnée du quatrième véhicule en une coordonnée par rapport au véhicule hôte (10), dans lequel le système de commande de conduite comprend en outre un capteur de magnétisme terrestre, et l'unité de conversion de coordonnées (140) convertit une valeur de coordonnées du quatrième véhicule détecté par le deuxième véhicule en une coordonnée basée sur un angle de direction de déplacement du véhicule hôte (10) et un angle de direction de déplacement du deuxième véhicule, l'angle de direction de déplacement du deuxième véhicule étant transmis par le deuxième véhicule, par rapport à un pôle nord, pôle N, détecté par le capteur de magnétisme terrestre, et

dans lequel l'unité de traitement de données (130) est configurée pour comparer le numéro d'identification du deuxième véhicule extrait et le numéro d'identification du véhicule figurant dans la pluralité de BSM, et pour associer le BSM correspondant au numéro d'identification au deuxième véhicule.

2. Système de commande de conduite selon la revendication 1, dans lequel l'unité de traitement de données (130) analyse les positions et les manœuvres de la pluralité de véhicules sur la base des informations contenues dans la pluralité de BSM par rapport à un troisième véhicule dont la plaque d'immatriculation n'est pas identifiable parmi la pluralité de véhicules, compare le résultat de l'analyse aux données du troisième véhicule détecté par l'unité de détection (160), et associe le troisième véhicule.

3. Système de commande de conduite selon la revendication 1 ou 2, dans lequel l'unité de traitement de données (130) compare la position du troisième véhicule détectée par l'unité de détection (160) aux informations de position contenues dans la pluralité de BSM et associe le BSM dans une plage d'erreur, avec le troisième véhicule.

4. Système de commande de conduite selon l'une quelconque des revendications 1 à 3, dans lequel l'unité de traitement de données (130) établit un ou plusieurs candidats correspondants en comparant les informations de manœuvre du troisième véhicule détecté par l'unité de détection (160) avec les informations de manœuvre contenues dans la pluralité de BSM, accumule les informations de manœuvre, et associe au troisième véhicule un BSM qui se situe dans une plage d'erreur parmi les candidats correspondants.

5. Système de commande de conduite selon l'une quelconque des revendications 1 à 4, dans lequel l'unité de traitement de données (130) détecte la position d'une voie de circulation et d'un objet, tel qu'une glissière de sécurité, situé sur la voie de circulation à l'aide de l'unité de détection (160), compare les informations de détection d'objet contenues dans la pluralité de BSM, et établit une correspondance entre le BSM et le troisième véhicule.

6. Système de commande de conduite selon l'une quelconque des revendications 1 à 5, dans lequel l'unité de traitement de données (130) génère et enregistre une nouvelle trajectoire pour le véhicule associé, change un candidat apparié, qui a réussi l'appariement pendant une période prédéterminée parmi le ou les candidats inclus dans les données d'appariement, avec l'appariement identifié, convertit l'appariement identifié, qui n'est pas apparié pendant la période de temps parmi un ou plusieurs appariements identifiés, en un candidat d'appariement, élimine une trace relative au candidat d'appariement qui n'est pas apparié pendant la période de temps parmi un ou plusieurs candidats d'appariement, et gère un résultat d'appariement sur la pluralité de véhicules.

7. Système de commande de conduite selon l'une quelconque des revendications 1 à 6, dans lequel l'unité de conversion de coordonnées (140) compense une rotation en faisant pivoter l'angle de direction de déplacement du véhicule hôte (10) par rapport au pôle N d'une valeur correspondant à la différence de l'axe de rotation par rapport au quatrième véhicule, compense une translation en utilisant la distance entre le véhicule hôte (10) et le deuxième véhicule, une distance entre le deuxième véhicule et le quatrième véhicule, et un angle de rotation par rapport au quatrième véhicule, et convertit une coordonnée par rapport au quatrième véhicule en une coordonnée.

8. Système de commande de conduite selon l'une quelconque des revendications 1 à 7, dans lequel l'unité de conversion de coordonnées (140) calcule une variation de la pente tangentielle de la voie et convertit les coordonnées du quatrième véhicule en utilisant un angle de rotation calculé à partir de la différence entre la voie et la direction de déplacement.

# FIG. 1

10

CAMERA UNIT 170

FIRST CAMERA 171

SECOND CAMERA 172

DATA UNIT 180

IMAGE RECOGNITION UNIT 120

CONTROL UNIT 110

DATA PROCESSING UNIT 130

DETECTION UNIT 160

POSITION SENSOR 161

OBSTACLE SENSOR 162

COORDINATE CONVERSION UNIT 140

COMMUNICATION UNIT 150

# FIG. 2

| | | |
|---|---|---|
| 181 | FIRST DATA FIELD | BASIC VEHICLE INFORMATION<br>MESSAGE SEQUENCE NUMBER, TEMPORARY ID, TIME<br>POSITION INFORMATION, VEHICLE VELOCITY, STEERING ANGLE,<br>ACCELERATION INFORMATION<br>BRAKE STATE, VEHICLE WIDTH, VEHICLE LENGTH |
| 182 | SECOND DATA FIELD | EVENT OBJECT<br>ROUTE HISTORY OBJECT<br>EXPECTED ROUTE OBJECT<br>VEHICLE POSITIONING DATA OBJECT |
| 183 | OPTIONAL FIELD | SENSOR DATA (LANES, OTHER VEHICLES,<br>TRAFFIC SIGNS, TRAFFIC SIGNALS)<br>VEHICLE IDENTIFICATION NUMBER |

# FIG. 3A

FIG. 3B

```
GENESIS

GV80

4WD

129C 2912
```

# FIG. 4

START

RECEIVE BSM ~ S310

RECOGNIZE NUMBER PLATE FROM IMAGE ~ S320

ACQUIRE VEHICLE IDENTIFICATION NUMBER ~ S330

S340
VEHICLE IDENTIFICATION NUMBER OF BSM IS COINCIDENT WITH NUMBER PLATE?

NO → S370
SORT CORRESPONDING BSM INTO VEHICLE IN NON-RECOGNIZED REGION

YES
MATCH BSM WITH SENSOR DATA ~ S350

TRACK VEHICLE ~ S360

END

# FIG. 5A

# FIG. 5B

# FIG. 6

```
                    ( START )
                        │
                        ▼
        ┌───────────────────────────────┐
        │  MATCH VEHICLE POSITION WITH   │───── S410
        │         BSM POSITION           │
        └───────────────────────────────┘
                        │
                        ▼           S420
                  ╱───────────────╲
          YES    ╱    MATCHING      ╲
        ◄───────◄  IS ALREADY IDENTIFIED MATCHING BASED ►
                  ╲     ON BSM ID?   ╱
                   ╲───────────────╱
                        │ NO
                        ▼           S430
                  ╱───────────────╲
          YES    ╱ NUMBER OF EXPECTED╲
        ◄───────◄  CANDIDATES IS ONE? ►
                   ╲───────────────╱
                        │ NO
                        ▼           S440
                  ╱───────────────╲
          YES    ╱ MATCHING IS POSSIBLE BASED ON╲
        ◄───────◄      VELOCITY?    ►
                   ╲───────────────╱
                        │ NO
                        ▼           S450
                  ╱───────────────╲
          YES    ╱    MATCHING      ╲
        ◄───────◄ IS POSSIBLE BASED ON LANE ►
  S460             ╲  INFORMATION?  ╱
                   ╲───────────────╱
  ┌──────────────────┐   │ NO
  │ VEHICLE MATCHING │──────►
  └──────────────────┘       │
                             ▼
                          ( END )
```

# FIG. 7

```
                    ┌─────────┐
                    │  START  │
                    └────┬────┘
                         │
           ┌─────────────▼─────────────┐
           │   FUSE PREVIOUS MATCHING  │
           │  RESULT AND NEW MATCHING  │─── S470
           │   RESULT BASED ON BSM ID  │
           └─────────────┬─────────────┘
                         │
                    S480 │                              S490
                     ◇───────────────┐     ┌──────────────────────┐
                    ╱ NEW MATCHING? ╲  YES  │ REGISTER NEW TRACK FOR│
                    ╲               ╱──────▶│  MATCHING CANDIDATE   │
                     ◇───────────────┘     └───────────┬──────────┘
                       NO │                            │
                          │◀───────────────────────────┘
                     S500 │                              S510
                     ◇─────────────────┐   ┌──────────────────────────┐
                    ╱ TRACK WITH        ╲YES│ CHANGE MATCHING CANDIDATE │
                    ╲ SUCCEEDED IN LONG-TERM│   TO IDENTIFIED MATCHING  │
                     ╲MATCHING IS PRESENT╱─▶└───────────┬──────────────┘
                      ╲AMONG MATCHING   ╱               │
                       ╲ CANDIDATES?   ╱                │
                        ◇─────────────┘                 │
                       NO │◀─────────────────────────────┘
                          │
                     S520 │                              S530
                     ◇─────────────────┐   ┌──────────────────────────┐
                    ╱ CANDIDATE,        ╲YES│ CHANGE IDENTIFIED MATCHING│
                    ╲ WHICH IS NOT SUBJECTED│   TO MATCHING CANDIDATE   │
                     ╲TO LONG-TERM      ╱─▶ └───────────┬──────────────┘
                      ╲MATCHING, IS PRESENT              │
                       ╲AMONG IDENTIFIED╱                │
                        ╲ MATCHING?    ╱                 │
                         ◇────────────┘                  │
                        NO │◀─────────────────────────────┘
                           │
                      S540 │                              S550
                      ◇─────────────────┐  ┌──────────────────────────┐
                     ╱ CANDIDATE,        ╲YES│   ELIMINATE TRACK FOR   │
                     ╲ WHICH IS NOT SUBJECTED│   MATCHING CANDIDATE    │
                      ╲TO LONG-TERM     ╱─▶ └───────────┬─────────────┘
                       ╲MATCHING, IS PRESENT             │
                        ╲AMONG MATCHING CANDIDATES?       │
                         ◇───────────┘                   │
                        NO │◀─────────────────────────────┘
                           │
                      ┌────▼────┐
                      │   END   │
                      └─────────┘
```

# FIG. 8A

# FIG. 8B

# FIG. 9

# FIG. 10

```
                    ( START )
                        │
                        ▼
        ┌──────────────────────────────┐
        │ RECOGNIZE PERIPHERAL VEHICLE │─── S570
        └──────────────────────────────┘
                        │
                        ▼
        ┌──────────────────────────────┐
        │          RECEIVE BSM          │─── S580
        └──────────────────────────────┘
                        │
                        ▼          S590
                    ◇─────────◇            NO          S610
                   ╱ NUMBER PLATE ╲ ───────────────────────┐
                  ◇  RECOGNIZABLE? ◇                        ▼
                   ╲               ╱          ┌──────────────────────────┐
                    ◇─────────◇              │   MATCH VEHICLE BASED     │
                        │ YES               │   ON VEHICLE OPERATION    │
                        ▼                    └──────────────────────────┘
        ┌──────────────────────────────┐                  │
        │     MATCH VEHICLE BASED ON    │─── S600           │
        │         NUMBER PLATE          │                  │
        └──────────────────────────────┘                  │
                        │◄───────────────────────────────────┘
                        ▼
        ┌──────────────────────────────┐
        │     EXTRACT SENSOR DATA OF    │─── S620
        │        MATCHED VEHICLE        │
        └──────────────────────────────┘
                        │
                        ▼          S630
                    ◇─────────◇            NO          S650
                   ╱ TERRESTRIAL ╲ ───────────────────────┐
                  ◇  MAGNETISM    ◇                        ▼
                   ╲   SENSOR?    ╱          ┌──────────────────────────┐
                    ◇─────────◇              │ CONVERT COORDINATE BASED │
                        │ YES               │  ON LANE AND TRAVELING   │
                        ▼                    │        DIRECTION         │
        ┌──────────────────────────────┐    └──────────────────────────┘
        │  CONVERT COORDINATE BASED ON  │─── S640           │
        │ TERRESTRIAL MAGNETISM SENSOR  │                  │
        └──────────────────────────────┘                  │
                        │◄───────────────────────────────────┘
                        ▼
        ┌──────────────────────────────┐
        │  COUPLE HOST VEHICLE SENSOR DATA │─── S660
        └──────────────────────────────┘
                        │
                        ▼
        ┌──────────────────────────────┐
        │     CONTROL DRIVING BASED ON  │─── S670
        │       RECOGNIZED VEHICLE      │
        └──────────────────────────────┘
                        │
                        ▼
                    (  END  )
```

# FIG. 11

# FIG. 12

```
                    ( START )
                        |
                        v
         +---------------------------------+
         |       SENSOR DETECTION          |——S700
         +---------------------------------+
                        |
                        v
         +---------------------------------+
         | RECEIVE BSM FROM SECOND VEHICLE |——S710
         +---------------------------------+
                        |
                        v       S720
                     /       \
          NO       /  INFORMATION ON  \
    <-----------  < NON-RECOGNIZED VEHICLE >
    |             \     EXISTS?    /
    |               \            /
    |                  \  YES  /
    |                     |        S730
    |                     v
    |                  /       \                 NO
    |                /  DATA RELIABILITY IS LOW?  \----------+
    |                \                          /           |
    |                  \                      /             |
    |                      \  YES  /                        |  S760
    |                         |                             v
    |         +---------------------------+    +---------------------------+
    |         | DECREASE MAXIMUM VELOCITY |    |   PROHIBIT ACCELERATION   |
    |         +---------------------------+    +---------------------------+
    |            |——S740                                    |
    |            v                                          v
    |         +---------------------------+    +---------------------------+
    |         |      PREPARE BRAKING      |    |     CONTROL VEHICLE       |
    |         +---------------------------+    |      BASED ON BSM         |
    |            |——S750                       +---------------------------+
    |            v                                    |       S770
    |         +---------------------------+           |
    |         |  REQUEST DETECTION OF     |<----------+
    |         |  DETAILED POSITION OF     |——S780
    |         |  NON-RECOGNIZED VEHICLE   |
    |         +---------------------------+
    |            |
    |            v
    |         +---------------------------+
    +------->|      CONTROL VEHICLE       |——S790
             +---------------------------+
                        |
                        v
                    (  END  )
```

# FIG. 13

# FIG. 14

```
                    ( START )
                        │
                        ▼
        ┌───────────────────────────────┐
        │      SENSOR DETECTION          │───S800
        └───────────────────────────────┘
                        │
                        ▼
        ┌───────────────────────────────┐
        │        RECEIVE BSM             │───S810
        └───────────────────────────────┘
                        │
                        ▼           S820
              ╱─────────────────────╲
     NO      ╱        VEHICLE         ╲
  ┌─────────  INFORMATION DETECTED BY SENSOR
  │          ╲   DOES NOT EXIST IN BSM?  ╱
  │           ╲─────────────────────────╱
  │                      │ YES
  │                      ▼
  │      ┌───────────────────────────────┐
  │      │  RESET VEHICLE RECOGNITION     │───S830
  │      │      CRITICAL VALUE            │
  │      └───────────────────────────────┘
  │                      │           S840
  │                      ▼
  │            ╱───────────────────╲        NO
  │           ╱  FIFTH VEHICLE IS    ╲──────────────┐
  │           ╲     DETECTED?         ╱              │
  │            ╲───────────────────╱                │  S860
  │                      │ YES                       ▼
  │      ┌───────────────────────────┐   ┌───────────────────────────┐
  │      │  CONTROL VEHICLE BASED     │   │   PROHIBIT ACCELERATION    │
  │      │     ON SENSOR DATA         │───S850                        │
  │      └───────────────────────────┘   └───────────────────────────┘
  │                      │                            │
  │                      ▼                            ▼
  │      ┌───────────────────────────┐   ┌───────────────────────────┐
  │      │ REQUEST DETECTION OF DETAILED │ │   CONTROL VEHICLE          │
  │      │ POSITION OF FIFTH VEHICLE/GHOST│───S880    BASED ON BSM      │
  │      │  VEHICLE BASED ON BSM      │   └───────────────────────────┘
  │      └───────────────────────────┘              S870
  │                      │
  └──────────────────────┤
                         ▼
        ┌───────────────────────────────┐
        │       CONTROL VEHICLE          │───S890
        └───────────────────────────────┘
                        │
                        ▼
                    (  END  )
```

# FIG. 15

# FIG. 16

START

S900

LANE IS RECOGNIZED? (HIGH RELIABILITY) — NO

YES ↓ S910

FRONT VEHICLE RECOGNITION AND MATCHING ARE COMPLETED? — NO

YES ↓ S920

MATCHING IS COMPLETELY PERFORMED ON VEHICLES ON LEFT AND RIGHT LANES AND FRONT VEHICLE IS RECOGNIZED THROUGH BSM? — NO

YES ↓ S930

VEHICLE NOT MATCHED IS ON LEFT AND RIGHT LANES? — NO

YES ↓ S940

DRIVER KEEPS EYES FORWARD AND HOLDS STEERING WHEEL? — NO

YES ↓

S950
INCREASE AUTONOMOUS DRIVING STEP

S960
NOTIFY AUTONOMOUS DRIVING STEP

S970
AUTONOMOUS DRIVING IS STEP 3? — NO

YES ↓ S980
DECREASE AUTONOMOUS DRIVING STEP

END

**EP 4 184 480 B1**

**Patent documents cited in the description**

- KR 102205299
- US 2019258875 A1
- US 2014104077 A1